# EUROPEAN PATENT APPLICATION

(11) **EP 4 070 954 A1**
(43) Date of publication of application: **12.10.2022**
(21) Application number: 20897324.8
(22) Date of filing: 25.11.2020
(51) Int. Cl.: B32B 27/36, B65D 65/40

(54) **LAMINATED LAYERED BODY**

(30) Priority: 05.12.2019 JP 2019220373
(71) Applicant: TOYOBO CO., LTD., Osaka-shi, Osaka 530-8230 (JP)
(72) Inventor: YAMAZAKI, Atsushi, Inuyama-shi, Aichi 484-8508 (JP); NUMATA, Yukihiro, Inuyama-shi, Aichi 484-8508 (JP); INAGAKI, Kyoko, Osaka-shi Osaka 530-8230 (JP); YAMAGUCHI, Yuya, Osaka-shi Osaka 530-8230 (JP); ISHIMARU, Shintaro, Tsuruga-shi, Fukui 914-8550 (JP)
(74) Representative: Vossius & Partner Patentanwälte Rechtsanwälte mbB
(86) International application number: PCT/JP2020/043806
(87) International publication number: WO 2021/111941

(57) **Abstract**

The invention provides a laminated body which contains an environmentally friendly recycled material, has a lamination constitution composed of substantially a single resin type mainly composed of polyester and having a low environmental load, and has required performances such as gas barrier properties, sealability, toughness, and transparency required for a packaging material.

The laminated body formed by laminating a polyester substrate film containing 50% by weight or more of a polyester resin recycled from PET bottles and a heat sealable resin layer in this order,
wherein the substrate film is a laminated film including an inorganic thin film layer (A) and a protective layer (a) containing a urethane resin on one surface thereof, and
the heat sealable resin layer is formed of a polyester-based resin mainly composed of ethylene terephthalate, and has a piercing strength of 10 N or more and a haze of 20% or less.

## Description

### TECHNICAL FIELD

The present invention relates to a laminated body used in the packaging fields of foods, pharmaceuticals, and industrial products and the like. More specifically, the present invention relates to an environment-responsive laminated body which has excellent gas barrier properties, processability, and toughness, can visualize contents, and has convenience capable of coping with microwave oven applications.

### BACKGROUND ART

In recent years, regulations for reducing the use of disposable plastics have been strengthened in various countries including Europe. In this background, there are growing international awareness of resource circulation and aggravated waste problems in emerging countries. Therefore, for plastic packaging materials required for foods and pharmaceuticals and the like, environment-responsive products are required from the viewpoint of 3R (recycle, reuse, reduce).

Examples of performances required for the above-mentioned environmentally friendly packaging material include: (1) the packaging material is made of a recycled material; (2) the packaging material has gas barrier performance capable of blocking various gases and extending the best-before expiration date; and (3) the packaging material has a lamination constitution with a less environmental load (for example, no organic solvent is used, the amount of the material used itself is small, and monomaterialization is possible).

As for the above (1), a polyester resin recycled from PET bottles is known as a typical recycled material, and a technique is known, in which a polyester film for a covering label having less trouble due to static electricity is formed of a polyester resin derived from PET bottles having a small oligomer content without deteriorating productivity and quality (see, for example, Patent Document 1). As environmental regulations increase in the future, demand for such film applications is expected to increase.

Regarding the above (2), in food applications requiring blocking of various gases such as water vapor and oxygen, a gas barrier laminated body in which a metal thin film made of aluminum or the like, and an inorganic thin film made of an inorganic oxide such as silicon oxide or aluminum oxide are formed on the surface of a substrate film made of plastic is generally used. Among them, a laminated body in which a thin film made of an inorganic oxide (inorganic thin film layer) such as silicon oxide, aluminum oxide, or a mixture thereof is formed is transparent, whereby the contents thereof can be confirmed. The laminated body can be used in a microwave oven. Therefore, the demand for the laminated body also increases from the environmental aspect of removal of an aluminum foil.

For the gas barrier film composed of the recycled material and the inorganic thin film as described above, a laminated film exhibiting good gas barrier properties when formed as a gas barrier laminated film including an inorganic thin film layer and a sealant layer has been proposed. The laminated film contains a polyester resin recycled from PET bottles, and has low heat shrink properties and small thickness unevenness (see, for example, Patent Document 2). However, such a conventional technique has insufficient barrier performance to replace the aluminum foil.

Regarding the above (3), a pouch including no aluminum foil is required to have barrier properties, heat resistance, toughness (bag breakage resistance and pinhole resistance), and high sealing properties of a bag at the same time, and thus, a constitution of at least three or more layers is generally obtained by drylaminating a vapor-deposited polyester film on the outside of the bag, a polyamide film as an intermediate layer, and an olefin-based heat sealable resin on the inside (content side) using an adhesive.

In the retort pouch constitution described above, in order to achieve monomaterialization from the environmental aspect, it is necessary to further improve the barrier performance of the bag (similar to the aluminum foil), not to use a polyamide film and an olefin-based sealant, or to change the polyamide film and the olefin-based sealant to a polyester-based material, However, the change was not easy in the conventional technique. When the olefin-based sealant is used, the transparency may be insufficient, which is not preferable from the viewpoint of the visibility safety and the viewpoint of the appearance after printing.

As an alternative to the polyamide film, use of a biaxially stretched polybutylene terephthalate (hereinafter, sometimes abbreviated as PBT) film has been studied (see, for example, Patent Document 3). It has been known that a biaxially stretched PBT-based film obtained by simultaneously biaxially stretching a resin composition composed of at least a polybutylene terephthalate resin or a polyester-based resin composition in which a polyethylene terephthalate (hereinafter, sometimes abbreviated as PET) resin is blended within a range of 30% by weight or less with respect to the polybutylene terephthalate resin by 2.7 to 4.0 times in each of vertical and transverse directions is used for a substrate film layer. Such a technique can provide a packaging material for liquid filling having flex pinhole resistance and impact resistance and having excellent aroma retaining properties. However, in this document, studies on specific numerical values and effects of barrier performance have been insufficient.

As an alternative to the olefin-based sealant, a polyester-based sealant having improved low adsorptivity and heat resistance is disclosed (see, for example, Patent Document 4). The sealant of Patent Document 4 separates a layer having heat sealability from other layers and separately controls the raw material compositions of these layers to satisfy heat sealability and heat resistance. However, the sealant described in Patent Document 4 does not have performance of blocking gases such as oxygen and water vapor (gas barrier properties), whereby the sealant does not contribute to improvement in barrier performance of a pouch.

### PRIOR ART DOCUMENTS

### PATENT DOCUMENT

Patent Document 1: JP-A-2012-91862
Patent Document 2: JP-B-6500629
Patent Document 3: JP-A-2017-094746
Patent Document 4: JP-A-2017-165059

### SUMMARY OF THE INVENTION

### PROBLEMS TO BE SOLVED BY THE INVENTION

In Patent Documents 1 to 4, the performances of the materials and the like are described, but as the performance required for the environmentally friendly packaging material, there have not been examined three points of (1) including a recycled material as a constituent material, (2) having gas barrier performance that can block various gases and extend the best-before expiration date, and (3) forming a lamination constitution that is easily recycled and has a less environmental load (monomaterialization), and achievement of the basic performances of the pouch (heat sealability, toughness, and transparency). There has been no conventional polyester-based packaging material that satisfies both the above constitutions and performances.

The present invention has been made in view of the problems of the conventional techniques.

That is, an object of the present invention is to provide a laminated body which contains an environmentally friendly recycled material, has a lamination constitution composed of substantially a single resin type mainly composed of polyester and having a low environmental load, and has required performances such as gas barrier properties, sealability, toughness, and transparency required for a packaging material.

### MEANS FOR SOLVING THE PROBLEMS

The present inventors have achieved monomaterialization while maintaining toughness, sealability, and transparency by laminating a substrate film having significantly improved gas barrier performance by laminating and bonding an inorganic thin film layer, a coating layer, and a barrier protective layer on each film (resin layer) in accordance with required barrier performance, and containing a polyester resin derived from PET bottles with a low environmental load and a sealant composed of a polyester component.

That is, the present invention comprises the following components.
1. A laminated body formed by laminating a polyester substrate film containing 50% by weight or more of a polyester resin recycled from PET bottles and a heat sealable resin layer in this order,
   wherein the substrate film is a laminated film including an inorganic thin film layer (A) and a protective layer (a) composing of a urethane resin on one surface thereof, and
   the heat sealable resin layer is formed of a polyester-based component mainly composed of ethylene terephthalate, and has a piercing strength of 10 N or more and a haze of 20% or less.
2. The laminated body according to 1., further comprising an intermediate layer film between the substrate film and the heat sealable resin layer with an adhesive interposed therebetween,
   wherein the intermediate layer film is formed of a resin composition containing 70% by mass or more of a PBT resin.
3. The laminated body according to 1. or 2.,
   wherein an inorganic thin film layer (B) is laminated on at least one surface of the heat sealable resin.
4. The laminated body according to any one of 1. to 3., wherein an inorganic thin film layer (C) is laminated on at least one surface of the intermediate layer film.
5. The laminated body according to any one of 1. to 4., wherein a protective layer (b) having a urethane resin is laminated on the inorganic thin film layer (C) of the intermediate layer film.
6. The laminated body according to any one of 1. to 5., further comprising a coating layer (Y) between the substrate film and the inorganic thin film layer (C).
7. The laminated body according to any one of 4. to 6., further comprising a coating layer (Y) between the intermediate layer film and the inorganic thin film layer (C) .
8. The laminated body according to any one of 1. to 7., wherein the inorganic thin film layers (A) to (C) is a layer made of aluminum oxide or a composite oxide of silicon oxide and aluminum oxide.

### EFFECT OF THE INVENTION

The present inventors have been able to provide a laminated body having required performances such as barrier properties, sealability, and toughness required for a packaging material while taking the environment into consideration by such a technique.

### MODE FOR CARRYING OUT THE INVENTION

The following is a detailed description of the present invention.

The laminated body of the present invention is formed by laminating a polyester substrate film containing 50% by weight or more of a polyester resin recycled from PET bottles and a heat sealable resin layer in this order,
wherein the substrate film is a laminated film including an inorganic thin film layer (A) and a protective layer (a) containing a urethane resin on one surface thereof, and
the heat sealable resin layer is formed of a polyester-based resin mainly composed of ethylene terephthalate, and has a piercing strength of 10 N or more and a haze of 20% or less.

### [Substrate Film Layer]

In the present invention, as described later, a recycled polyester resin regenerated from PET bottles containing an isophthalic acid component as an acid component is preferably used as a raw material for a substrate film. Therefore, the substrate film is composed of a mixed resin of a recycled polyester resin and a virgin raw material, that is, an unrecycled resin, and the intrinsic viscosity of the resin constituting the film means a value obtained by measuring the intrinsic viscosity of the mixed resin constituting the film. The lower limit of the intrinsic viscosity of the resin constituting the film obtained by measuring the substrate film is preferably 0.58 dl/g, and more preferably 0.60 dl/g. When the intrinsic viscosity is less than 0.58 dl/g, the intrinsic viscosity of the recycled resin composed of PET bottles often exceeds 0.68 dl/g, and when the viscosity is reduced at the time of producing a film using the recycled resin, poor thickness unevenness may occur, which is not preferable. The film may be colored, which is not preferable. The upper limit is preferably 0.70 dl/g, and more preferably 0.68 dl/g. When the intrinsic viscosity exceeds 0.70 dl/g, the resin is less likely to be discharged from an extruder, whereby the productivity may be lowered, which is not preferable.

The lower limit of the thickness of the substrate film is preferably 8 µm, more preferably 10 µm, and still more preferably 12 µm. If the thickness is less than 8 µm, the strength of the film may be insufficient, which is not preferable. The upper limit is preferably 200 µm, more preferably 50 µm, and still more preferably 30 pm. If the thickness exceeds 200 µm, the film becomes too thick, which may cause difficult processing. It is not preferable that the thickness of the film increases from the viewpoint of an environmental load, and it is preferable to reduce the volume as much as possible.

The lower limit of the refractive index of the substrate film in the thickness direction is preferably 1.4930, and more preferably 1.4940. If the refractive index is less than 1.4930, orientation is not sufficient, and therefore a lamination strength may not be obtained. The upper limit is preferably 1.4995 and more preferably 1.4980. If the refractive index exceeds 1.4995, the orientation of the plane may collapse to cause insufficient mechanical characteristics, which is not preferable.

The lower limit of the heat shrinkage rate of the substrate film treated at 150°C for 30 minutes in the machine direction (sometimes referred to as MD) and the transverse direction (sometimes referred to as TD) is preferably 0.1%, and more preferably 0.3%. If the heat shrinkage rate is less than 0.1%, the improvement effect may be saturated, and the film may be mechanically brittle, which is not preferable. The upper limit is preferably 3.0%, and more preferably 2.5%. If the heat shrinkage rate exceeds 3.0%, pitch deviation and the like may occur due to dimensional change during processing such as printing, which is not preferable. If the heat shrinkage rate exceeds 3.0%, shrinkage and the like in the transverse direction may occur due to dimensional change during processing such as printing, which is not preferable.

A recycled polyester resin derived from PET bottles containing an isophthalic acid component as an acid component is preferably used as a raw material for a substrate film. The crystallinity of a polyester used for PET bottles is controlled in order to improve the bottle appearance, and as a result, a polyester containing 10 mol% or less of an isophthalic acid component may be used. In order to utilize a recycled resin, a material containing an isophthalic acid component may be used.

The lower limit of the amount of a terephthalic acid component in all dicarboxylic acid components constituting the polyester resin contained in the substrate film is preferably 95.0 mol%, more preferably 96.0 mol%, still more preferably 96.5 mol%, and particularly preferably 97.0 mol%. If the amount is less than 95.0 mol%, crystallinity is deteriorated, whereby the heat shrinkage rate may increase, which is not so preferable. The upper limit of the amount of the terephthalic acid component in the polyester resin contained in the film is preferably 99.5 mol%, and more preferably 99.0 mol%. Many of the recycled polyester resins derived from PET bottles contain dicarboxylic acid components typified by isophthalic acid besides terephthalic acid, whereby the amount of the terephthalic acid component constituting the polyester resin in the film exceeding 99.5 mol% consequently makes it difficult to produce a polyester film containing a recycled resin at a high rate, which is not so preferable.

The lower limit of the amount of the isophthalic acid component in all the dicarboxylic acid components constituting the polyester resin contained in the substrate film is preferably 0.5 mol%, more preferably 0.7 mol%, still more preferably 0.9 mol%, and particularly preferably 1.0 mol%. Recycled polyester resins derived from PET bottles contain a large amount of an isophthalic acid component, whereby the amount of the isophthalic acid component constituting the polyester resin in the film of less than 0.5 mol% consequently makes it difficult to produce a polyester film containing a recycled resin at a high rate, which is not so preferable. The upper limit of the amount of the isophthalic acid component in all the dicarboxylic acid components constituting the polyester resin contained in the film is preferably 5.0 mol%, more preferably 4.0 mol%, still more preferably 3.5 mol%, and particularly preferably 3.0 mol%. If the amount exceeds 5 mol%, crystallinity is deteriorated, whereby the heat shrinkage rate may increase, which is not so preferable. When the content rate of the isophthalic acid component is within the above range, a film having an excellent lamination strength, an excellen shrinkage rate, and reduced thickness unevenness can be easily produced, which is preferable.

The upper limit of the intrinsic viscosity of the recycled resin derived from PET bottles is preferably 0.90 dl/g, more preferably 0.80 dl/g, still more preferably 0.77 dl/g, and particularly preferably 0.75 dl/g. If the intrinsic viscosity exceeds 0.9 dl/g, the resin is less likely to be discharged from an extruder, whereby the productivity may be lowered, which is not so preferable.

The lower limit of the content rate of the polyester resin recycled from PET bottles in the film is preferably 50% by weight, more preferably 65% by weight, and still more preferably 75% by weight. If the content rate is less than 50% by weight, the content rate is low for utilization of the recycled resin, which is not so preferable in terms of contribution to environmental protection. Since the recycled resin is produced by solid phase polymerization, the content of oligomers that may cause film whitening is small. Therefore, as the content rate of the recycled resin is higher, the whitening of the film after retorting tends to be improved. When the content rate of the recycled resin is less than 50%, there is a concern that the whitening unevenness of the film after retorting is promoted. Meanwhile, the upper limit of the content rate of the polyester resin recycled from PET bottles is not particularly limited, but is preferably 95% by weight, more preferably 90% by weight, and still more preferably 85% by weight. If the content rate exceeds 95% by weight, it is sometimes impossible to sufficiently add a lubricant or an additive such as inorganic particles for improving the function as a film, which is not so preferable. A polyester resin recycled from PET bottles may be used as a master batch (a resin contained in a high concentration) used when a lubricant or an additive such as inorganic particles is added for improving the function as a film.

As the kind of the lubricant, inorganic lubricants such as silica, calcium carbonate, and alumina, and also organic lubricants are preferable, and silica and calcium carbonate are more preferable. By these lubricants, transparency and slippage can be exhibited.

The lower limit of the lubricant content rate in the substrate film is preferably 0.01% by weight, more preferably 0.015% by weight, and still more preferably 0.02% by weight. If the content rate is less than 0.01% by weight, the slippage may be deteriorated. The upper limit of the lubricant content rate is preferably 1% by weight, more preferably 0.2% by weight, and still more preferably 0.1% by weight. If the lubricant content rate exceeds 1% by weight, transparency may be deteriorated, which is not so preferable.

A method for producing the substrate film used in the laminated body of the present invention is not particularly limited, but for example, the following production method is recommended. It is important to set a temperature for melting and extruding a resin in an extruder. The basic idea is that (1) deterioration is suppressed by extrusion at a temperature as low as possible, since a polyester resin used for PET bottles contains an isophthalic acid component, and (2) the polyester resin has a portion that melts at a high temperature or a high pressure or the like in order to sufficiently and uniformly melt an intrinsic viscosity or a fine highly crystalline portion. Addition of the isophthalic acid component leads to deterioration in the tacticity of a polyester and a decrease in the melting point. Therefore, extrusion at a high temperature results in a significant decrease in melt viscosity or deterioration by heat, and also in a decrease in the mechanical strength and an increase in foreign matters resulting from the deterioration. Sufficient meltkneading is impossible merely by lowering the extrusion temperature, which may result in problems of an increase in thickness unevenness and foreign matters such as fish eyes. From the above, examples of a recommended production method include a method of using two extruders in tandem, a method of increasing the pressure in a filter part, or a method of using a screw having a high shear force for a part of a screw constitution.

The lower limit of the set temperature of the resin melting part in the extruder (excluding the maximum set temperature of the compression part of the screw in the extruder) is preferably 270°C, and the upper limit thereof is preferably 290°C. If the set temperature is lower than 270°C, extrusion is difficult, and if the temperature exceeds 290°C, the resin may be deteriorated, which is not so preferable.

The lower limit of the highest set temperature in the compression part of the screw in the extruder is preferably 295°C. In a polyester resin used for PET bottles, crystals having a high melting point (260°C to 290°C) often exist in terms of transparency. An additive and a crystallization nucleating agent and the like are added, and unevenness in the fine melting behavior is observed in the resin material. If the highest set temperature is lower than 295°C, it is difficult to sufficiently melt them, which is not so preferable. The upper limit of the highest set temperature in the compression part of the screw in the extruder is preferably 310°C. If the highest set temperature exceeds 310°C, the resin may be deteriorated, which is not so preferable.

The lower limit of the time for the resin to pass the region at the highest set temperature in the compression part of the screw in the extruder is preferably 10 seconds, and more preferably 15 seconds. If the time is shorter than 10 seconds, the polyester resin used for PET bottles cannot be sufficiently melted, which is not so preferable. The upper limit of the time is preferably 60 seconds, and more preferably 50 seconds. If the time exceeds 60 seconds, the resin is apt to be deteriorated, which is not so preferable. By setting the extruder in such ranges, a film reduced in thickness unevenness, foreign matters such as fish eyes, and coloration can be obtained even if a large amount of a polyester resin recycled from PET bottles is used.

The resin melted in this manner is extruded in a sheet-like form on a cooling roll, and then biaxially stretched. The stretching method may be a simultaneous biaxial stretching method, but a sequential biaxial stretching method is particularly preferable. These make it easy to satisfy productivity and quality required in the present invention.

A method for stretching the film in the present invention is not particularly limited, but the following points are important. In order to stretch a resin having an intrinsic viscosity of 0.58 dl/g or more and containing an isophthalic acid component, ratios and temperatures in the machine direction (MD) stretching and transverse direction (TD) stretching are important. If the MD stretch ratio and the temperature are not appropriate, a stretching force is not uniformly applied, and the orientation of molecules is insufficient, which may result in an increase in thickness unevenness or insufficient mechanical characteristics. The film may be broken in the next TD stretching step, or thickness unevenness may be extremely increased. If the TD stretch ratio and the temperature are not appropriate, the film may not be uniformly stretched; balance of the vertical and transverse orientation may be deteriorated; and the mechanical characteristics may be insufficient. When the next heat setting step is performed in the state that the thickness unevenness is significant or the molecular chain orientation is insufficient, relaxation cannot be uniformly performed, which causes problems of more significant thickness unevenness and insufficient mechanical characteristics. Therefore, it is basically recommended that in the MD stretching, stretching is performed step by step by performing temperature adjustment described below, and in the TD stretching, stretching is performed at an appropriate temperature so that the orientation balance is not extremely deteriorated. The present invention is not limited to the following aspects, but will be described with an example.

A machine direction (MD) stretching method is preferably a roll stretching method or an IR heating method.

The lower limit of the MD stretching temperature is preferably 100°C, more preferably 110°C, and still more preferably 120°C. Even if the MD stretching temperature is lower than 100°C, and a polyester resin with an intrinsic viscosity of 0.58 dl/g or more is stretched to orient molecules in the machine direction, the film is broken in the next transverse stretching step or an extreme thickness defect is caused, which is not preferable. The upper limit of the MD stretching temperature is preferably 140°C, more preferably 135°C, and still more preferably 130°C. If the MD stretching temperature exceeds 140°C, the orientation of molecular chains becomes insufficient, whereby mechanical characteristics may become insufficient, which is not so preferable.

The lower limit of the MD stretch ratio is preferably 2.5 times, more preferably 3.5 times, and still more preferably 4 times. Even if the MD stretch ratio is less than 2.5 times, and a polyester resin having an intrinsic viscosity of 0.58 dl/g or more is stretched to orient molecules in the machine direction, the film may be broken in the next transverse stretching step or an extreme thickness defect may be caused, which is not so preferable. The upper limit of the MD stretch ratio is preferably 5 times, more preferably 4.8 times, and still more preferably 4.5 times. If the MD stretch ratio exceeds 5 times, the effect of improving a mechanical strength and thickness unevenness may be saturated, which is not so meaningful.

The MD stretching method may be the above-mentioned one-stage stretching, but the film is preferably stretched in two or more stages. Stretching in two or more stages makes it possible to well stretch a polyester resin having a high intrinsic viscosity and derived from a recycled resin containing isophthalic acid, which provides reduced thickness unevenness, and an improved lamination strength and mechanical characteristics.

The lower limit of the MD stretching temperature in the first stage is preferably 110°C, and more preferably 115°C. If the MD stretching temperature is lower than 110°C, heat is insufficient, whereby vertical stretching cannot be sufficiently performed, resulting in poor flatness, which is not preferable. The upper limit of the MD stretching temperature in the first stage is preferably 125°C, and more preferably 120°C. If the MD stretching temperature exceeds 125°C, the orientation of molecular chains may become insufficient and mechanical characteristics may be deteriorated, which is not so preferable.

The lower limit of the MD stretch ratio in the first stage is preferably 1.1 times, and more preferably 1.3 times. If the MD stretch ratio is 1.1 times or more, finally, a polyester resin having an intrinsic viscosity of 0.58 dl/g or more can be sufficiently stretched in the machine direction by weak stretching in the first stage, and accordingly, the productivity can be improved. The upper limit of the MD stretch ratio in the first stage is preferably 2 times, and more preferably 1.6 times. If the MD stretch ratio exceeds 2 times, the orientation of molecular chains in the machine direction is too high, whereby the stretching may become difficult in the second stage or thereafter and the film may have significant thickness unevenness, which is not so preferable.

The lower limit of the MD stretching temperature in the second stage (or final stage) is preferably 110°C, and more preferably 115°C. If the MD stretching temperature is 110°C or higher, a polyester resin having an intrinsic viscosity of 0.58 or more can be sufficiently stretched in the machine direction and can be stretched in the transverse direction in the next step, so that the thickness unevenness in the vertical and transverse directions can be reduced. The upper limit of the MD stretching temperature is preferably 130°C, and more preferably 125°C. If the MD stretching temperature exceeds 130°C, crystallization is promoted, whereby the transverse stretching may become difficult or the thickness unevenness may become significant, which is not so preferable.

The lower limit of the MD stretch ratio in the second stage (or final stage) is preferably 2.1 times, and more preferably 2.5 times. Even if the MD stretch ratio is less than 2.1 times, and a polyester resin having an intrinsic viscosity of 0.58 or more is stretched to orient molecules in the machine direction, the film may be broken in the next transverse stretching step or an extreme thickness defect may be caused, which is not so preferable. The upper limit of the MD stretch ratio is preferably 3.5 times, and more preferably 3.1 times. If the MD stretch ratio exceeds 3.5 times, the orientation in the machine direction is too high, whereby the stretching may be impossible in the second stage or thereafter and the film may have significant thickness unevenness, which is not so preferable.

The lower limit of the TD stretching temperature is preferably 110°C, more preferably 120°C, and still more preferably 125°C. If the TD stretching temperature is lower than 110°C, the stretching stress in the transverse direction is increased, whereby the film may be broken or the thickness unevenness may become extremely significant, which is not so preferable. The upper limit of the TD stretching temperature is preferably 150°C, more preferably 145°C, and still more preferably 140°C. If the TD stretching temperature exceeds 150°C, the orientation of molecular chains does not increase, whereby mechanical characteristics may be deteriorated, which is not so preferable.

The lower limit of the transverse direction (TD) stretch ratio is preferably 3.5 times, and more preferably 3.9 times. If the stretch ratio is less than 3.5 times, molecular orientation is weak, whereby a mechanical strength may become insufficient, which is not so preferable. The orientation of molecular chains in the machine direction is significant and the balance between the vertical and transverse directions is deteriorated to make the thickness unevenness significant, which is not so preferable. The upper limit of the TD stretch ratio is preferably 5.5 times, and more preferably 4.5 times. If the TD stretch ratio exceeds 5.5 times, the film may be broken, which is not so preferable.

In order to obtain the substrate film used for the laminated film of the present invention, it is desirable to appropriately set conditions for heat setting continuously performed in a tenter after the completion of the TD stretching and for the subsequent cooling of the film to room temperature. As compared with a common polyethylene terephthalate film containing no isophthalic acid, a polyester film containing a recycled resin derived from PET bottles and containing isophthalic acid has low crystallinity, is apt to be melted in an ultrafine level, and has a poor mechanical strength. Therefore, when the polyester film is exposed to high temperatures under strain abruptly after completion of stretching, or when the polyester film is abruptly cooled under strain after completion of heat setting at high temperatures, a tensile force balance in the transverse direction is disordered due to an inevitable temperature difference in a film transverse direction, which results in thickness unevenness and defective mechanical characteristics. Meanwhile, when the heat setting temperature is lowered to deal with the phenomenon, a sufficient lamination strength may not be obtained. In the present invention, it is recommended to perform steps of heat setting 1 at a slightly low temperature, heat setting 2 (as necessary, heat setting 3) at a sufficiently high temperature, and thereafter, gradual cooling to lower the temperature to room temperature after the completion of stretching. However, the present invention is not limited to this method, and other recommended methods include a method of controlling the film tension correspondingly to the velocity of hot air in the tenter and the temperatures in the respective zones; a method of performing heat treatment at a relatively low temperature in a furnace with a sufficient length after the completion of stretching; and a method of relaxing the film by heat rolls after the completion of the heat setting.

As one example, a method by controlling the tenter temperature will be described.

The lower limit of the temperature in the heat setting 1 is preferably 160°C, and more preferably 170°C. If the temperature is lower than 160°C, the heat shrinkage rate finally increases, and deviation and shrinkage may be caused at the time of processing, which is not so preferable. The upper limit of the temperature is preferably 215°C, and more preferably 210°C. If the temperature exceeds 215°C, the film is abruptly exposed to a high temperature, whereby the thickness unevenness may become significant or the film may be broken, which is not so preferable.

The lower limit of the time for the heat setting 1 is preferably 0.5 seconds, and more preferably 2 seconds. If the time is shorter than 0.5 sec, the film temperature increase may be insufficient. The upper limit of the time is preferably 10 seconds, and more preferably 8 seconds. If the time exceeds 10 seconds, productivity may be deteriorated, which is not so preferable.

The lower limit of the temperature in the heat setting 2 is preferably 220°C, and more preferably 227°C. If the temperature is lower than 220°C, the heat shrinkage rate may become significant, whereby deviation and shrinkage may be caused at the time of processing, which is not so preferable. The upper limit of the temperature is preferably 240°C, and more preferably 237°C. If the temperature exceeds 240°C, the film may be melted, or even if not melted, the film may be fragile, which is not so preferable.

The lower limit of the time for the heat setting 2 is preferably 0.5 seconds, and more preferably 3 seconds. If the time is shorter than 0.5 seconds, the film may be apt to be broken at the time of heat setting, which is not so preferable. The upper limit of the time is preferably 10 seconds, and more preferably 8 seconds. If the upper limit of the time exceeds 10 seconds. sagging may occur to result in thickness unevenness, which is not so preferable.

The lower limit of the temperature in the case where the heat setting 3 is performed as necessary is preferably 205°C, and more preferably 220°C. If the temperature is lower than 205°C, the heat shrinkage rate may become significant, and deviation whereby shrinkage may be caused at the time of processing, which is not so preferable. The upper limit of the temperature is preferably 240°C, and more preferably 237°C. If the temperature exceeds 240°C, the film may be melted, or even if not melted, the film may be fragile, which is not so preferable.

The lower limit of the time in the case where the heat setting 3 is performed as necessary is preferably 0.5 seconds, and more preferably 3 seconds. If the time is shorter than 0.5 seconds, the film may be apt to be broken at the time of heat setting, which is not so preferable. The upper limit of the time is preferably 10 seconds, and more preferably 8 seconds. If the time exceeds 10 seconds, sagging may occur to cause thickness unevenness, which is not so preferable.

TD relaxation may be carried out at any point in the heat setting. The lower limit thereof is preferably 0.5%, and more preferably 3%. If the lower limit is less than 0.5%, the heat shrinkage rate particularly in the transverse direction becomes significant, whereby deviation and shrinkage may be caused at the time of processing, which is not so preferable. The upper limit thereof is preferably 10%, and more preferably 8%. If the upper limit exceeds 10%, sagging may occur to cause thickness unevenness, which is not so preferable.

The lower limit of the gradual cooling temperature after the TD heat setting is preferably 90°C, and more preferably 100°C. If the gradual cooling temperature is lower than 90°C, the film contains isophthalic acid, whereby the thickness unevenness may become significant because of shrinkage by abrupt temperature change or the film may be broken, which is not so preferable. The upper limit of the gradual cooling temperature is preferably 150°C, and more preferably 140°C. If the gradual cooling temperature exceeds 150°C, a sufficient cooling effect may not be obtained, which is not so preferable.

The lower limit of the gradual cooling time after the heat setting is preferably 2 seconds, and more preferably 4 seconds. If the gradual cooling time is shorter than 2 seconds, a sufficient gradual cooling effect may not be obtained, which is not so preferable. The upper limit thereof is preferably 20 seconds, and more preferably 15 seconds. The gradual cooling time exceeding 20 seconds is apt to be disadvantageous in terms of productivity, which is not so preferable.

The upper limit of the haze per thickness of the substrate film layer in the present invention is preferably 0.66%/µm, more preferably 0.60%/µm, and still more preferably 0.53%/µm. When the substrate film layer having a haze of 0.66%/µm or less is subjected to printing, the quality of printed characters and images is improved.

The substrate film layer in the present invention may be subjected to corona discharge treatment, glow discharge treatment, flame treatment, or surface roughening treatment, as long as the object of the present invention is not impaired, and may be subjected to known anchor coating treatment, printing, or decoration or the like.

A layer made of another material may be laminated on the substrate film layer in the present invention. As the method, the layer may be laminated on the substrate film layer after or during the production of the substrate film layer.

### [Inorganic Thin Film Layer]

In the present invention, an inorganic thin film layer (A) is provided on the surface of the substrate film. The inorganic thin film layer (A) is a thin film made of a metal or an inorganic oxide. The material for forming the inorganic thin film layer is not particularly limited as long as the material can be made into a thin film, but from the viewpoint of gas barrier properties, inorganic oxides such as silicon oxide (silica), aluminum oxide (alumina), and mixtures of silicon oxide and aluminum oxide are preferable. In particular, a composite oxide of silicon oxide and aluminum oxide is preferable from the viewpoint that both flexibility and denseness of the thin film layer can be achieved. In this composite oxide, silicon oxide and aluminum oxide are preferably mixed at such a mixing ratio that the concentration of Al is within a range of 20 to 70% by mass in terms of metal content by mass. If the concentration of Al is less than 20% by mass, the barrier properties against water vapor may be deteriorated. Meanwhile, If the concentration of Al exceeds 70% by mass, the inorganic thin film layer tends to be harder, whereby the film may be broken during secondary processing such as printing or lamination to cause deteriorated gas barrier properties. The silicon oxide as used herein is various silicon oxides such as SiO and SiO2, or a mixture thereof, and the aluminum oxide as used herein is various aluminum oxides such as AlO and Al2O3, or a mixture thereof.

The film thickness of the inorganic thin film layer (A) is normally 1 to 100 nm, and preferably 5 to 50 nm. If the film thickness of the inorganic thin film layer (A) is less than 1 nm, satisfactory gas barrier properties may be less likely to be obtained. Meanwhile, even if the film thickness exceeds 100 nm such that the inorganic thin film layer is excessively thickened, the gas barrier properties-improving effect equivalent to such increase in the thickness cannot be obtained, and such a film thickness is rather disadvantageous in terms of flex resistance and production cost.

The method for forming the inorganic thin film layer (A) is not particularly limited, and known vapor-deposition methods, for example, physical vapor-deposition methods (PVD methods) such as a vacuum vapor-deposition method, a sputtering method, and an ion plating method, or chemical vapor-deposition methods (CVD methods) may be adopted as appropriate. Hereinafter, a typical method for forming the inorganic thin film layer (A) will be described by taking a silicon oxide-aluminum oxide based thin film as an example. For example, in the ease of adopting a vacuum vapor-deposition method, a mixture of SiO2 and Al2O3, or a mixture of SiO2 and Al, or the like is preferably used as a vapor-deposition raw material. Normally, particles are used as these vapor-deposition raw materials. In this case, the size of each particle is desirably a size that does not change the pressure during vapor-deposition, and a preferable particle size is 1 mm to 5 mm. For heating, systems such as resistive heating, high frequency induction heating, electron beam heating, and laser heating can be adopted. It is also possible to adopt reactive vapor-deposition in which oxygen, nitrogen, hydrogen, argon, carbon dioxide gas, or water vapor or the like is introduced as a reaction gas or a means such as ozone addition or ion assist is used. Furthermore, film production conditions such as applying a bias to a body to be vapor-deposited (laminated film to be vapor-deposited) and heating or cooling the body to be vapor-deposited can also be optionally changed. Similarly, the vapor-deposition materials, the reaction gases, the application of a bias to the body to be vapor-deposited, and the heating/cooling and the like can be changed even when a sputtering method or a CVD method is adopted.

### [Coating Layer]

In the laminated body of the present invention, a coating layer (X) can be provided between the substrate film layer and the inorganic thin film layer (A) for the purpose of securing stable gas barrier properties and a lamination strength. Examples of the resin composition used for the coating layer (X) provided between the substrate film layer and the inorganic thin film layer (A) include compositions obtained by adding epoxy-based, isocyanate-based, melamine-based, oxazoline-based, and carbodiimide-based curing agents and the like to urethane-based, polyester-based, acryl-based, titanium-based, isocyanate-based, imine-based, and polybutadiene-based resins and the like. These resin compositions used for the coating layer (X) preferably contain a silane coupling agent having at least one or more organic functional groups. The organic functional groups include alkoxy groups, amino groups, epoxy groups, isocyanate groups, etc. By the addition of the silane coupling agent, the lamination strength after retorting is further improved.

Among the resin compositions used for the coating layer (X), a mixture of a resin containing an oxazoline group or a carbodiimide group, an acrylic resin, and a urethane-based resin is preferably used. These functional groups have high affinity with the inorganic thin film, and can react with a metal hydroxide and an oxygen deficiency portion of an inorganic oxide that is generated during formation of the inorganic thin film layer, whereby firm adhesion to the inorganic thin film layer is exhibited. An unreacted functional group present in a coating layer can react with a carboxylic acid terminal that is generated by hydrolysis of the substrate film layer and the coating layer, thereby forming cross-links.

In the present invention, the adhesion amount of the coating layer (X) is preferably 0.010 to 0.200 (g/m²). This makes it possible to uniformly control the coating layer, and as a result, the inorganic thin film layer can be densely deposited. The cohesive force inside the coating layer is improved, and the adhesion between the respective layers of the substrate film-coating layer (X)-inorganic thin film layer (A) is also improved, whereby the water-resistant adhesiveness of the coating layer can be improved. The adhesion amount of the coating layer (X) is preferably 0.015 (g/m²) or more, more preferably 0.020 (g/m²) or more, and still more preferably 0.025 (g/m²) or more, and preferably 0.190 (g/m²) or less, more preferably 0.180 (g/m²) or less, and still more preferably 0.170 (g/m²) or less. If the adhesion amount of the coating layer (X) exceeds 0.200 (g/m²), the cohesive force inside the coating layer becomes insufficient, whereby good adhesion may not be exhibited. Since the uniformity of the coating layer is also deteriorated, defects occur in the inorganic thin film layer, whereby the gas barrier properties may be deteriorated. Moreover, the production cost increases, which is economically disadvantageous. Meanwhile, if the film thickness of the coating layer (X) is less than 0.010 (g/m²), the substrate cannot be sufficiently coated, whereby sufficient gas barrier properties and interlayer adhesion may not be obtained.

The method for forming the coating layer (X) is not particularly limited, and, for example, conventionally known methods such as coating methods can be adopted. Examples of suitable methods among the coating methods include an off-line coating method and an in-line coating method. For example, in the case of an in-line coating method that is performed in a step of producing a substrate film layer, as conditions for drying and a heat treatment during coating, although depending on a coating thickness or conditions of an apparatus, it is preferable to send the substrate film to a stretching step in a perpendicular direction immediately after coating and to perform drying in a pre-heating zone or a stretching zone in the stretching step. In such a case, normally, the temperature is preferably set to about 50 to 250°C.

Examples of the solvent (solvating medium) used when the coating method is used include aromatic solvents such as benzene and toluene; alcohol-based solvents such as methanol and ethanol; ketone-based solvents such as acetone and methyl ethyl ketone; ester-based solvents such as ethyl acetate and butyl acetate; and polyhydric alcohol derivatives such as ethylene glycol monomethyl ether.

### [Protective Layer]

In the present invention, a protective layer (a) is provided on the inorganic thin film layer (A). The inorganic thin film layer formed of the metal oxide layer is not a completely dense film, but has minute deficient portions dotted therein. By applying a specific resin composition for a protective layer described later onto the metal oxide layer to form a protective layer (a), the resin contained in the resin composition for a protective layer penetrates into the deficient portions of the metal oxide layer, which accordingly provides an effect of stabilizing the gas barrier properties. In addition, by using a material having gas barrier properties also for the protective layer (a) itself, the gas barrier performance of the laminated film may also be significantly improved. Furthermore, the layer having barrier properties prevents the intrusion of hot water into the substrate, and as a result, the transparency of the film can also be maintained.

In the present invention, the adhesion amount of the protective layer (a) is preferably 0.10 to 0.40 (g/m²). This makes it possible to uniformly control the protective layer in coating, resulting in a film having less coating unevenness and defects. The cohesive force of the protective layer itself is improved, and the adhesion between the inorganic thin film layer and the protective layer is also firm. Furthermore, the protective layer contributes to the suppression of the appearance of oligomers, and the haze after retorting is stabilized. The adhesion amount of the protective layer (a) is preferably 0.13 (g/m²) or more, more preferably 0.16 (g/m²) or more, and still more preferably 0.19 (g/m²) or more, and preferably 0.37 (g/m²) or less, more preferably 0.34 (g/m²) or less, and still more preferably 0.31 (g/m²) or less. If the adhesion amount of the protective layer (a) exceeds 0.400 (g/m²), the gas barrier properties are improved, but the cohesive force inside the protective layer is insufficient, and the uniformity of the protective layer is also deteriorated, whereby unevenness and defects may occur in the coating appearance, or the gas barrier properties and the adhesiveness may not be sufficiently exhibited. Meanwhile, if the film thickness of the protective layer (a) is less than 0.10 (g/m²), sufficient gas barrier properties and interlayer adhesion may not be obtained.

As the resin composition used for the protective layer (a) formed on the surface of the inorganic thin film layer of the laminated body of the present invention, resins such as a polyester-based resin, an acryl-based resin, a titanium-based resin, an isocyanate-based resin, an imine-based resin, and a polybutadiene-based resin and the like can be used with a urethane-based resin as an essential constituent component, and curing agents such as an epoxy-based resin, an isocyanate-based resin, and a melamine-based resin may be further added.

In particular, the urethane resin is preferably contained because, in addition to barrier performance due to high cohesiveness of a urethane bond itself, a polar group interacts with the inorganic thin film layer and also has flexibility due to the presence of its amorphous portion, so that damage to the inorganic thin film layer can be suppressed even when a flexing load is applied. A polyester resin is also suitable because the same effect can be expected.

### (Urethane Resin)

The glass transition temperature (Tg) of the urethane resin used in the present invention is preferably 100°C or higher, more preferably 110°C or higher, and still more preferably 120°C or higher from the viewpoint of improvement in the barrier properties due to the cohesive force. However, in order to exhibit an adhesion force, a flexible resin having excellent flexibility and a Tg of 100°C or lower may be mixed with the urethane resin. In that case, the addition ratio of the flexible resin is preferably within a range of 0 to 80%. The addition ratio is more preferably within a range of 10 to 70%, and still more preferably within a range of 20 to 60%. If the addition ratio is within the above range, both the cohesive force and the flexibility can be achieved, whereby the barrier properties and the adhesion are improved. If the addition ratio exceeds 80%, the film becomes too soft, which may lead to deterioration in barrier performance.

A urethane resin containing an aromatic or aromatic-aliphatic diisocyanate component as a main constituent component is more preferably used as the urethane resin from the viewpoint of improving the gas barrier properties thereof.

Among them, it is particularly preferable that the urethane resin contains a metaxylylene diisocyanate component. The use of the resin allows an effect of stacking between its aromatic rings to further increase the cohesive force of the urethane bonds. Consequently, good gas barrier properties are obtained.

In the present invention, the proportion of the aromatic or aromatic-aliphatic diisocyanate in the urethane resin is preferably set to 50 mol% or more (50 to 100 mol%) in 100 mol% of the polyisocyanate component (F). The total proportion of the aromatic or aromatic-aliphatic diisocyanate is preferably 60 to 100 mol%, more preferably 70 to 100 mol%, and still more preferably 80 to 100 mol%. As such resins, "TAKELAC (registered trademark) WPB" series commercially available from Mitsui Chemicals, Inc. can be suitably used. If the total proportion of the aromatic or aromatic-aliphatic diisocyanate is less than 50 mol%, good gas barrier properties may not be obtained.

In the urethane resin used in the present invention, various cross-linking agents such as a silicon-based cross-linking agent may be blended as long as the gas barrier properties are not impaired for the purpose of improving the cohesive force and the wet heat resistant adhesiveness of the film. As a method of introducing a silanol group into the protective layer, a method in which a silane coupling agent or the like is added later is also known. However, in the case of this method, complicated workings may increase, and the measurement of an added amount may be mistaken. Meanwhile, when a silanol group is contained in a polyurethane dispersion skeleton in advance, there is an advantage that the above-described complicated workings and mistaken measurement can be avoided.

When the amount of the silanol group contained in the polyurethane dispersion is less than 700 mg per kg of a resin constituting the polyurethane dispersion as a Si element amount contained in the silanol group, a cross-linking structure is insufficiently formed, and the resin itself is deteriorated when retorting is applied, leading to deterioration in adhesion and gas barrier properties after retorting.

When the amount of the silanol group exceeds 1700 mg per kg of a resin constituting the polyurethane dispersion as a Si element amount contained in the silanol group, a cross-linking structure excessively increases, whereby the flexibility of the protective layer is impaired, and deterioration in the inorganic thin film and reduction in flexing resistance occur during retorting. Furthermore, since the amount of unreacted silanol groups increases, the water resistance of the protective layer weakens, and deterioration in the resin itself occurs when retorting is applied.

Meanwhile, examples of the cross-linking agent that can be added later include a silicon-based cross-linking agent, an oxazoline compound, a carbodiimide compound, and an epoxy compound. Among them, the water-resistant adhesiveness to the inorganic thin film layer can be particularly improved by blending a silicon-based cross-linking agent. From this viewpoint, a silicon-based cross-linking agent is particularly preferable. In addition, an oxazoline compound, a carbodiimide compound, and an epoxy compound and the like may be used in combination as the cross-linking agent.

As the silicon-based cross-linking agent, a silane coupling agent is preferable from the viewpoint of cross-linking between an inorganic substance and an organic substance. Examples of the silane coupling agent include hydrolyzable alkoxysilane compounds such as halogen-containing alkoxysilanes (chloro C2-4 alkyltri Cl-4 alkoxysilanes such as 2-chloroethyltrimethoxysilane, 2-chloroethyltriethoxysilane, 3-chloropropyltrimethoxysilane, and 3-chloropropyltriethoxysilane), alkoxysilanes having an epoxy group [glycidyloxy C2-4 alkyltri C1-4 alkoxysilanes such as 2-glycidyloxyethyltrimethoxysilane, 2-glycidyloxyethyltriethoxysilane, 3-glycidyloxypropyltrimethoxysilane, and 3-glycidyloxypropyltriethoxysilane, glycidyloxy C2-4 alkyldi C1-4 alkoxysilanes such as 3-glycidyloxypropylmethyldimethoxysilane and 3-glycidyloxypropylmethyldiethoxysilane, (epoxycycloalkyl) C2-4 alkyltri C1-4 alkoxysilanes such as 2-(3,4-epoxycyclohexyl)ethyltrimethoxysilane, 2-(3,4-epoxycyclohexyl)ethyltriethoxysilane, and 3-(3,4-epoxycyclohexyl)propyltrimethoxysilane], alkoxysilanes having an amino group [amino C2-4 alkyltri C1-4 alkoxysilanes such as 2-aminoethyltrimethoxysilane, 3-aminopropyltrimethoxysilane, and 3-aminopropyltriethoxysilane, aminodi C2-4 alkyldi C1-4 alkoxysilanes such as 3-aminopropylmethyldimethoxysilane and 3-aminopropylmethyldiethoxysilane, (2-amino C2-4 alkyl)amino C2-4 alkyltri C1-4 alkoxysilanes such as 2-[N-(2-aminoethyl)amino]ethyltrimethoxysilane, 3-[N-(2-aminoethyl)amino]propyltrimethoxysilane, and 3-[N-(2-aminoethyl)amino]propyltriethoxysilane, (amino C2-4 alkyl)aminodi C2-4 alkyldi C1-4 alkoxysilanes such as 3-[N-(2-aminoethyl)amino]propylmethyldimethoxysilane and 3-[N-(2-aminoethyl)amino]propylmethyldiethoxysilane], mercapto C2-4 alkyltri C1-4 alkoxysilanes such as alkoxysilanes having a mercapto group (2-mercaptoethyltrimethoxysilane, 3-mercaptopropyltrimethoxysilane, and 3-mercaptopropyltriethoxysilane, mercaptodi C2-4 alkyldi Cl-4 alkoxysilanes) such as 3-mercaptopropylmethyldimethoxysilane and 3-mercaptopropylmethyldiethoxysilane, alkoxysilanes having a vinyl group (vinyltri C1-4 alkoxysilanes such as vinyltrimethoxysilane, and vinyltriethoxysilane), and alkoxysilanes having an ethylenic unsaturated bond group [(meth)acryloxy C2-4 alkyltri C1-4 alkoxysilanes such as 2-(meth)acryloxyethyltrimethoxysilane, 2-(meth)acryloxyethyltriethoxysilane, 3-(meth)acryloxypropyltrimethoxysilane, 3-(meth)acryloxypropyltriethoxysilane, (meth)acryloxydi C2-4 alkyldi C1-4 alkoxysilanes such as 3-(meth)acryloxypropylmethyldimethoxysilane and 3-(meth)acryloxypropylmethyldiethoxysilane). These silane coupling agents may be used alone or in combination of two or more thereof. Among these silane coupling agents, a silane coupling agent having an amino group is preferable.

The amount of the silicon-based cross-linking agent such as the silane coupling agent added to the protective layer is preferably 0.25 to 3.00% by mass, more preferably 0.5 to 2.75% by mass, and still more preferably 0.75 to 2.50% by mass. If the added amount exceeds 3.00% by mass, the curing of the film proceeds to provide an improved cohesive force, but an unreacted portion is also partially generated, which may cause deteriorated interlayer adhesiveness. Meanwhile, if the added amount is less than 0.25% by mass, a sufficient cohesive force may not be obtained.

### (Polyester Resin)

A polyester resin used in the protective layer of the present invention is produced by polycondensation of a polycarboxylic acid component and a polyhydric alcohol component. The molecular weight of the polyester is not particularly limited as long as it can impart sufficient film toughness, coating suitability, and solvent solubility as a coating material, but is 1000 to 50000, and more preferably 1500 to 30000 in terms of number average molecular weight. The functional group at the polyester terminal is not particularly limited, and may have an alcohol terminal, a carboxylic acid terminal, or both the terminals. However, when an isocyanate-based curing agent is used in combination, it is necessary to use a polyester polyol mainly having an alcohol terminal.

### [Glass Transition Temperature (Tg) of Polyester]

The Tg of the polyester used in the present invention needs to be 15°C or higher. This is because if the Tg is lower than the temperature, the resin has tackiness after the coating operation, which is apt to cause blocking to occur, resulting in a difficult winding operation after coating. This is because if the Tg of 15°C or lower makes it difficult to take measures for preventing blocking even under a situation where a pressure near a winding core is high due to the addition of an antiblocking material. The Tg is more preferably 18°C or higher, and still more preferably 25°C or higher.

The polyester used in the present invention is obtained by polycondensation of a polycarboxylic acid component and a polyhydric alcohol component.

### [Polyvalent Carboxylic Acid Component]

The polycarboxylic acid component of the polyester used in the present invention contains at least one of an ortho-oriented aromatic dicarboxylic acid or an anhydride thereof.

Examples of the aromatic polycarboxylic acid in which a carboxylic acid is substituted at an ortho position or an anhydride thereof include orthophthalic acid or an anhydride thereof, naphthalene 2,3-dicarboxylic acid or an anhydride thereof, naphthalene 1,2-dicarboxylic acid or an anhydride thereof, anthraquinone 2,3-dicarboxylic acid or an anhydride thereof, and 2,3-anthracene carboxylic acid or an anhydride thereof. These compounds may have a substituent at any carbon atom of the aromatic ring. The substituent includes chloro group, bromo group, methyl group, ethyl group, i-propyl group, hydroxyl group, methoxy group, ethoxy group, phenoxy group, methylthio group, phenylthio group, cyano group, nitro group, amino group, phthalimide group, and carboxyl group, carbamoyl group, N-ethylcarbamoyl group, phenyl group, or naphthyl group, etc. The polyester polyol having a use rate of 70 to 100% by mass with respect to all the components of the polycarboxylic acid is particularly preferable because the polyester polyol has a high effect of improving the barrier properties and excellent solvent solubility essential for the coating material.

The polyester used in the present invention may be copolymerized with another polycarboxylic acid component as long as the effect of the present invention is not impaired. Specifically, examples of the aliphatic polyvalent carboxylic acid include succinic acid, adipic acid, azelaic acid, sebacic acid, and dodecanedicarboxylic acid; examples of the unsaturated bond-containing polyvalent carboxylic acid include maleic anhydride, maleic acid, and fumaric acid; examples of the alicyclic polyvalent carboxylic acid include 1,3-cyclopentane dicarboxylic acid and 1,4-cyclohexanedicarboxylic acid; and examples of the aromatic polyvalent carboxylic acid include terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, diphenic acid and anhydrides thereof, 1,2-bis(phenoxy)ethane-p,p'-dicarboxylic acid, and anhydride or ester forming derivatives of these dicarboxylic acids; and polybasic acids such as p-hydroxybenzoic acid, p-(2-hydroxyethoxy)benzoic acid and ester-forming derivatives of these dihydroxycarboxylic acids can be used alone or in a mixture of two or more thereof. Among them, succinic acid, 1,3-cyclopentane dicarboxylic acid, isophthalic acid, 2,6-naphthalenedicarboxylic acid, 1,8-naphthalic acid, and diphenic acid are preferable from the viewpoint of the organic solvent solubility and the gas barrier properties.

### [Polyhydric Alcohol Component]

The polyhydric alcohol component of the polyester used in the present invention is not particularly limited as long as it can synthesize a polyester exhibiting performance for gas barrier compensation, but it is preferable to contain a polyhydric alcohol component containing at least one selected from the group consisting of ethylene glycol, propylene glycol, butylene glycol, neopentyl glycol, cyclohexanedimethanol, and 1,3-bishydroxyethylbenzene. Among them, ethylene glycol is most preferably used as a main component because it is estimated that as the number of carbon atoms among the oxygen atoms is smaller, the molecular chain does not become excessively flexible and thus, oxygen permeation is less likely to occur.

As the polyester used in the present invention, it is preferable to use the above-described polyhydric alcohol component, but other polyhydric alcohol components may be copolymerized as long as the effect of the present invention is not impaired. Specifically, the diols include 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol, and alcohols that are trihydric or higher include glycerol, trimethylolpropane, trimethylol ethane, tris(2 -Hydroxyethyl) isocyanurate, 1,2,4-butantriol, pentaerythritol, and dipentaerythritol, etc. In particular, among trihydric alcohols, a polyester in which glycerol and tris(2-hydroxyethyl)isocyanurate are used in combination is derived from a branched structure, and has a moderately high cross-linking density, whereby the polyester has good organic solvent solubility and an excellent barrier function, which is particularly preferably used.

Examples of the catalyst used in the reaction for obtaining the polyester used in the present invention include acid catalysts such as tin-based catalysts (such as monobutyl tin oxide and dibutyl tin oxide), titanium-based catalysts (such as tetra-isopropyl-titanate and tetra-butyl-titanate), and zirconia-based catalysts (such as tetra-butyl-zirconate). It is preferable to use a combination of the above-described titanium-based catalyst such as tetra-isopropyl-titanate or tetra-butyl-titanate, which has high activity for an ester reaction, and the above-described zirconia-based catalyst. As for the amount of the catalyst, the catalyst is used in an amount of 1 to 1000 ppm of the total mass of the reaction raw material to be used, and more preferably 10 to 100 ppm. If the amount is less than 1 ppm, the catalytic effect is less likely to be obtained, and if the amount is more than 1000 ppm, a problem that an urethanization reaction is inhibited may occur when an isocyanate curing agent is used.

In the present invention, when the polyester resin is used as the main agent of the coating agent constituting the protective layer, it is necessary to use an isocyanate-based curing agent as the curing agent to form a urethane resin. In this case, the coating layer becomes a cross-linking system, which provides an advantage that heat resistance, abrasion resistance, and rigidity are improved. Therefore, the laminated body is likely to be used for boiling and retort packaging. Meanwhile, there are also problems that the liquid cannot be reused after mixing the curing agent, and a curing (aging) step is required after coating.

When the polyester has a hydroxyl group, at least a part of the polyisocyanate compound used in the protective layer (a) of the present invention reacts to form a urethane structure, thereby forming a highly-polar resin component. The highly-polar resin component causes the polymer chains to aggregate, which makes it possible to further enhance a gas barrier function. When the resin of the coating material is a linear resin, heat resistance and abrasion resistance can be imparted by cross-linking with a trivalent or higher polyisocyanate. The polyisocyanate compound used in the present invention may be any of a diisocyanate, a trivalent or higher polyisocyanate, a low molecular weight compound, and a polymer compound, but it is preferable that an aromatic ring or an aliphatic ring is contained in a part of the skeleton from the viewpoint of a gas barrier improving function. Examples of the isocyanate having an aromatic ring include toluene diisocyanate, diphenylmethane diisocyanate, xylylene diisocyanate, and naphthalene diisocyanate, and examples of the isocyanate having an aliphatic ring include hydrogenated xylylene diisocyanate, hydrogenated toluene diisocyanate, isophorone diisocyanate, norboron diisocyanate, trimers of these isocyanate compounds, and terminal isocyanate group-containing compounds obtained by reacting an excess amount of these isocyanate compounds with, for example, low molecular active hydrogen compounds such as ethylene glycol, propylene glycol, trimethylolpropane, glycerin, sorbitol, ethylenediamine, monoethanolamine, diethanolamine, and triethanolamine, or various polyester polyols, polyether polyols, and high molecular active hydrogen compounds such as polyamides.

The coating method of the resin composition for a protective layer is not particularly limited as long as it is a method of coating the film surface to form a layer. For example, normal coating methods such as gravure coating, reverse roll coating, wire bar coating, and die coating can be employed.

When the protective layer (a) is formed, it is preferable to apply the resin composition for a protective layer and then heat and dry the resin composition, and the drying temperature at that time is preferably 110 to 190°C, more preferably 130 to 185°C, and still more preferably 150 to 180°C. If the drying temperature is lower than 110°C, insufficient drying may occur in the protective layer, or the formation of the protective layer does not proceed, whereby a cohesive force and water-resistant adhesiveness may be deteriorated, resulting in deterioration in barrier properties and hand tearability. Meanwhile, if the drying temperature exceeds 190°C, heat is excessively applied to the film, whereby the film may become brittle to cause a decreased puncture strength, or the film may shrink to cause deteriorated processability. In particular, by drying at 150°C or higher, and preferably 160°C or higher, the formation of the protective layer effectively proceeds, which provides a further increased adhesion area between the resin of the protective layer and the inorganic thin film layer, so that the water-resistant adhesiveness can be improved. If the solvent in the protective film is first volatilized under relatively low temperature conditions of 90°C to 110°C immediately after coating, and the protective film is then dried at 150°C or higher, a uniform and transparent film can be obtained, which is particularly preferable. In addition to drying, it is also more effective to perform additional heat treatment in a low temperature range as much as possible in order to advance the formation of the protective layer.

### [Intermediate Layer Film]

In the present invention, a polyester film containing PBT as a main constituent component can be used as an intermediate layer in order to secure the toughness of the bag while enabling monomaterialization. The intermediate layer film used in the present invention is a biaxially stretched film made of a resin composition containing 70% by mass or more of PBT. The content rate of PBT is more preferably 75% by mass or more. If the content rate of PBT is less than 70% by mass, the puncture strength decreases whereby the film characteristics are not sufficient.

PBT contains terephthalic acid as a dicarboxylic acid component in an amount of preferably 90 mol% or more, more preferably 95 mol% or more, still more preferably 98 mol% or more, and most preferably 100 mol%. The amount of 1,4 butanediol as a glycol component is preferably 90 mol% or more, more preferably 95 mol% or more, and still more preferably 97 mol% or more. Most preferably, PBT does not contain any substance other than by-products generated by an ether bond of 1,4-butanediol during polymerization.

The resin composition used for the intermediate layer film of the present invention may contain a polyester other than PBT for the purpose of adjusting the film formability during biaxial stretching and the mechanical characteristics of the obtained film.

Examples of the polyester other than PBT include at least one polyester selected from the group consisting of PET, polyethylene naphthalate, polybutylene naphthalate, and polypropylene terephthalate, PBT in which at least one dicarboxylic acid selected from the group consisting of isophthalic acid, orthophthalic acid, naphthalenedicarboxylic acid, biphenyldicarboxylic acid, cyclohexanedicarboxylic acid, adipic acid, azelaic acid, and sebacic acid is copolymerized, and PBT in which at least one diol component selected from the group consisting of ethylene glycol, 1,3-propylene glycol, 1,2-propylene glycol, neopentyl glycol, 1,5-pentanediol, 1,6-hexanediol, diethylene glycol, cyclohexanediol, polyethylene glycol, polytetramethylene glycol, and polycarbonate diol is copolymerized.

The upper limit of the added amount of these polyester resins other than PBT is preferably 30% by mass or less, and more preferably 25% by mass or less. If the added amount of polyester other than PBT exceeds 30% by mass, the mechanical characteristics of polybutylene terephthalate are impaired, whereby problems may occur that transparency and gas barrier properties decrease as well as the impact strength, pinhole resistance, or bag breakage resistance is insufficient.

The lower limit of the intrinsic viscosity of polybutylene terephthalate (PBT) used in the present invention is preferably 0.9 dl/g, more preferably 0.95 dl/g, and still more preferably 1.0 dl/g.

When the intrinsic viscosity of polybutylene terephthalate (PBT) that is a raw material is less than 0.9 dl/g, the intrinsic viscosity of the film obtained by film formation decreases, whereby piercing strength, impact strength, pinhole resistance, or bag breakage resistance or the like may decrease.

The upper limit of the intrinsic viscosity of polybutylene terephthalate is preferably 1.4 dl/g. If the intrinsic viscosity exceeds the above value, the stress during stretching becomes too high, which may cause deteriorated film formability. When polybutylene terephthalate having a high intrinsic viscosity is used, the melt viscosity of the resin increases, which makes it necessary to increase the extrusion temperature. However, if polybutylene terephthalate is extruded at a higher temperature, decomposition products may be apt to be generated.

The polybutylene terephthalate (PBT) resin may contain conventionally known additives such as a lubricant, a stabilizer, a coloring agent, an anti-static agent, and an ultraviolet absorber as necessary.

As the lubricant type, organic lubricants as well as inorganic lubricants such as silica, calcium carbonate, and alumina are preferable, and silica and calcium carbonate are more preferable. Among the lubricants, silica is particularly preferable from the viewpoint of reducing a haze. Transparency and slippage can be exhibited by these lubricants.

The lower limit of the concentration of the lubricant is preferably 100 ppm, more preferably 500 ppm, and still more preferably 800 ppm. If the concentration of the lubricant is less than the above value, the slippage of the substrate film layer may decrease. The upper limit of the concentration of the lubricant is preferably 20000 ppm, more preferably 10000 ppm, and still more preferably 1800 ppm. If the concentration of the lubricant exceeds the above value, the transparency may decrease.

The upper limit of the heat shrinkage rate of the biaxially stretched polyester film constituting the intermediate layer film in the present invention is preferably 4.0%, more preferably 3.0%, and still more preferably 2% after the film is heated at 150°C for 15 minutes in the vertical stretching (longitudinal) direction (MD) and the transverse stretching (transverse) direction (TD). If the heat shrinkage rate exceeds the upper limit, the inorganic thin film layer cracks by the dimensional change of the intermediate layer film which occurs in the step of forming the inorganic thin film layer and the protective layer and in a high temperature treatment such as a retorting sterilization treatment, and not only the gas barrier properties may decrease but also pitch deviation may occur by the dimensional change during processing such as printing.

The lower limit of the heat shrinkage rate of the biaxially stretched polyester film constituting the intermediate layer film in the present invention is preferably 0% after the film is heated at 150°C for 15 minutes in the vertical stretching direction (MD) and the transverse stretching direction (TD). Even if the heat shrinkage rate is below the lower limit, the effect of improvement is not obtained any more (is saturated) and the film may become mechanically brittle.

The lower limit of the impact strength of the biaxially stretched polyester film constituting the intermediate layer film in the present invention is preferably 0.05 J/µm. When the impact strength is 0.05 J/µm or more, the strength becomes sufficient when the film is used as a bag.

The upper limit of the impact strength of the biaxially stretched polyester film constituting the intermediate layer film in the present invention is preferably 0.2 J/µm. Even if the impact strength exceeds the upper limit, the effect of improvement is not obtained any more (is saturated).

The lower limit of the degree of plane orientation (ΔP) of the PBT film as the intermediate layer film of the present invention is preferably 0.144, more preferably 0.148, and still more preferably 0.15. If the degree of plane orientation is less than the above value, the orientation is weak, whereby sufficient strength is not obtained and not only the puncture strength may decrease but also the gas barrier properties may decrease in the case where an inorganic thin film layer (C) is provided on the intermediate layer film to form a laminated film since the polyester film is apt to be stretched depending on the tension and the temperature applied during the inorganic thin film layer formation and the inorganic thin film layer cracks.

The upper limit of the degree of plane orientation (ΔP) of the intermediate layer film in the present invention is preferably 0.160, and more preferably 0.158. If the degree of plane orientation exceeds the above value, the orientation becomes too strong, whereby breakage is apt to occur during film formation. As the orientation is increased, heat setting at a higher temperature is required to decrease the heat shrinkage rate and crystallization may rather decrease the strength of the film.

The upper limit of the haze per thickness of the biaxially stretched polyester film constituting the intermediate layer film in the present invention is preferably 0.66%/µm, more preferably 0.60%/µm, and still more preferably 0.53%/µm. When printing is performed on a substrate layer having a haze per thickness of 0.66%/pm or less, the quality of printed characters and images is improved.

The upper limit of the intrinsic viscosity (I.V.) of the biaxially stretched polyester film constituting the intermediate layer film in the present invention is preferably 1.20 dl/g, more preferably 1.15 dl/g, and still more preferably 1.10 dl/g. If the intrinsic viscosity exceeds the upper limit, the strength of the film is improved but the pressure load applied to the filter during extrusion increases, which makes it difficult to produce the film. The lower limit of the intrinsic viscosity (I.V.) is preferably 0.60 dl/g, more preferably 0.65 dl/g, and still more preferably 0.70 dl/g. If the intrinsic viscosity is below the lower limit, the strength of the film may decrease.

The biaxially stretched polyester film constituting the intermediate layer film in the present invention may be subjected to a corona discharge treatment, a glow discharge treatment, a flame treatment, or a surface roughening treatment and also subjected to a known anchor coating treatment, printing, or decoration or the like as long as the object of the present invention is not impaired.

Next, a production method for obtaining the biaxially stretched polyester film constituting the intermediate layer film of the present invention will be specifically described. The production method is not limited thereto.

The production method for obtaining the biaxially stretched polyester film constituting the intermediate layer film of the present invention includes a step of melt-extruding a polyester raw material resin into a sheet and cooling the sheet on a casting drum to mold an un-stretched sheet, a vertical stretching step of stretching the un-stretched sheet thus molded in the machine direction, a preheating step of preheating the stretched sheet to a temperature at which transverse stretching is possible after the vertical stretching, a transverse stretching step of stretching the stretched sheet in a transverse direction orthogonal to the vertical direction, a heat setting step of heating and crystallizing the film after subjected to the vertical stretching and the transverse stretching, a thermal relaxation step of removing residual strain of the heat set film, and a cooling step of cooling the film after thermal relaxation.

### [Un-stretched Sheet Molding Step]

First, film raw materials are dried or hot air dried. Next, the raw materials are weighed, mixed, supplied to an extruder, heated and melted, and melt-casted into a sheet.

Furthermore, the melted resin sheet is brought into close contact with a cooling roll (casting roll) to be cooled and solidified by an electrostatic application method to obtain an un-stretched sheet. The electrostatic application method is a method in which the resin sheet is charged by applying a voltage to an electrode installed in the vicinity of the melted resin sheet in contact with a rotating metal roll and in the vicinity of the surface opposite to the surface of the resin sheet in contact with the rotating metal roll and the resin sheet is brought into close contact with the rotating cooling roll.

The lower limit of the heating and melting temperature of the resin is preferably 200°C, more preferably 250°C, and still more preferably 260°C. If the heating and melting temperature is lower than the above value, the discharge may become unstable. The upper limit of the melting temperature of the resin is preferably 280°C, and more preferably 270°C. If the melting temperature of the resin exceeds the value, the decomposition of the resin proceeds, whereby the film becomes brittle.

It is preferable to decrease the difference in crystallinity degree in the transverse direction when the melted polyester resin is extruded and cast onto the cooling roll. Examples of a specific method for this include a method in which raw materials having the same composition are multi-layered and cast when the melted polyester resin is extruded and cast and a method in which the cooling roll temperature is lowered.

A PBT resin has a high crystallization rate, and thus the crystallization thereof proceeds even during casting.

At this time, in the case of performing casting in monolayer without performing multi-layering, there is no obstacle that can inhibit growth of crystals, whereby the crystals are grown into large-sized spherulites. As a result, the yield stress of the obtained un-stretched sheet increases, whereby not only the un-stretched sheet is apt to be broken during biaxial stretching but also the obtained biaxially stretched film exhibits insufficient impact strength, pinhole resistance, or bag breakage resistance. Meanwhile, by laminating the same resin in multiple layers, the stretching stress of the un-stretched sheet can be decreased, whereby the subsequent biaxial stretching can be stably performed.

The method for multi-layering and casting the raw materials having the same composition when the melted polyester resin is extruded and cast specifically includes at least a step (1) of melting a resin composition containing 70% by weight or more of a PBT resin to form a melted fluid; a step (2) of forming a laminated fluid having a number of lamination of 60 or more from the melted fluid thus formed; a step (3) of discharging the laminated fluid thus formed from a die and bringing the discharged fluid into contact with a cooling roll to be solidified to form a laminated un-stretched sheet; and a step (4) of biaxially stretching the laminated un-stretched sheet.

There is no problem even if other steps are inserted between the step (1) and the step (2) and between the step (2) and the step (3). For example, a filtration step and a temperature change step and the like may be inserted between the step (1) and the step (2). The temperature change step and a charge addition step and the like may be inserted between the step (2) and the step (3). However, there should not be a step of breaking the laminated structure formed in the step (2) between the step (2) and the step (3).

In the step (1), the method of melting the polyester resin composition to form a melted fluid is not particularly limited, and a suitable method includes a method of melting the polyester resin composition under heat using a single screw extruder or a twin screw extruder.

The method of forming the laminated fluid in the step (2) is not particularly limited. From the viewpoints of facility simplicity and maintainability, a static mixer and/or a multi-layer feed block is more preferable. A static mixer and/or a multi-layer feed block having a rectangular melt line is more preferable, from the viewpoint of the uniformity of the sheet in the transverse direction. It is still more preferable to use a static mixer or multi-layer feed block having a rectangular melt line. A resin composition composed of a plurality of layers formed by combining a plurality of resin compositions may be allowed to pass through any one of or two or more of a static mixer, a multi-layer feed block, and a multi-layer manifold.

The theoretical number of lamination in the step (2) is preferably 60 or more. The lower limit of the theoretical number of lamination is more preferably 500. When the theoretical number of lamination is too small, or the distance between layer interfaces becomes long, the crystal size becomes too large, whereby the effect of the present invention is less likely to be obtained. The crystallinity degree in the vicinity of both ends of the sheet increases, whereby the film formation becomes unstable, and the transparency after molding may decrease. The upper limit of the theoretical number of lamination in the step (2) is not particularly limited, but is preferably 100,000, more preferably 10,000, and still more preferably 7000. Even if the theoretical number of lamination is extremely increased, the effect may be saturated.

When the lamination in the step (2) is performed by a static mixer, the theoretical number of lamination can be adjusted by selecting the number of elements of the static mixer. The static mixer is generally known as a static-type mixing device (line mixer) having no drive unit, and the fluid entering the mixer is sequentially stirred and mixed by the elements. However, if a high-viscosity fluid is passed through the static mixer, the high-viscosity fluid is divided and laminated to form a laminated fluid. Each time the high-viscosity fluid passes through one element of the static mixer, the high-viscosity fluid is divided into two and the two fluids are joined together and laminated. For this reason, if a high-viscosity fluid is allowed to pass through a static mixer having n elements, a laminated fluid having a theoretical number of lamination N = 2n is formed.

A typical static mixer element has a structure in which a rectangular plate is twisted by 180 degrees, and a right element and a left element are present depending on the twisting direction. The dimensions of the elements are basically as follows: the length is 1.5 times the diameter. The static mixer that can be used in the present invention is not limited to those described above.

When the lamination in the step (2) is performed by a multi-layer feed block, the theoretical number of lamination can be adjusted by selecting the number of times of division and lamination of the multi-layer feed block. It is possible to install a plurality of multi-layer feed blocks in series. It is also possible to use, as a laminated fluid, a high-viscosity fluid itself supplied to the multi-layer feed block. For example, when the number of lamination of the high-viscosity fluid supplied to the multi-layer feed block is p, the number of division and lamination of the multi-layer feed block is q, and the number of multi-layer feed blocks installed is r, the number of lamination N of the laminated fluid is N = p × qr.

In the step (3), the laminated fluid is discharged from a die and brought into contact with a cooling roll to be solidified.

The lower limit of the temperature of the cooling roll is preferably -10°C. If the temperature of the cooling roll is lower than the above value, the crystallization suppressing effect may be saturated. The upper limit of the temperature of the cooling roll is preferably 40°C. If the temperature of the cooling roll exceeds the above value, the crystallinity degree becomes too high, which may cause difficult stretching. The upper limit of the temperature of the cooling roll is preferably 25°C. When the temperature of the cooling roll is set within the above range, it is preferable to decrease the humidity of the environment in the vicinity of the cooling roll in order to prevent dew formation. It is preferable to decrease the temperature difference in the transverse direction of the surface of the cooling roll. At this time, the thickness of the un-stretched sheet is suitable within a range of 15 to 2500 µm.

The un-stretched sheet having a multi-layer structure described above has at least 60 layers or more, preferably 250 layers or more, and still more preferably 1000 layers or more. If the number of layers is small, the effect of improving stretchability is lost.

### [Vertical Stretching and Transverse Stretching Steps]

Next, a stretching method will be described. The stretching method can be simultaneous biaxial stretching or sequential biaxial stretching, but it is required to increase the degree of plane orientation in order to increase the piercing strength and sequential biaxial stretching is most preferable from the viewpoint of a high film forming speed and high productivity.

The lower limit of the stretching temperature in the vertical stretching direction is preferably 55°C, and more preferably 60°C. If the stretching temperature is 55°C or higher, breakage is less likely to occur. Since the degree of vertical orientation of the film does not become too strong, shrinkage stress during a heat setting treatment is suppressed, whereby a film with less distortion of molecular orientation in the transverse direction is obtained. The upper limit of the stretching temperature in the vertical stretching direction is preferably 100°C, and more preferably 95°C. If the stretching temperature is 100°C or lower, the orientation of the film does not become too weak, whereby the mechanical characteristics of the film do not decrease.

The lower limit of the stretching ratio in the vertical stretching direction is preferably 2.8 times, and particularly preferably 3.0 times. If the stretching ratio is 2.8 times or more, the degree of plane orientation increases, whereby the piercing strength of the film is improved.

The upper limit of the stretching ratio in the vertical stretching direction is preferably 4.3 times, more preferably 4.0 times, and particularly preferably 3.8 times. If the stretching ratio is 4.3 times or less, the degree of orientation of the film in the transverse direction does not become too strong, the shrinkage stress during the heat setting treatment does not become too significant, and the distortion of molecular orientation of the film in the transverse direction is reduced. As a result, the straight tear properties in the machine direction are improved. The effect of improving the mechanical strength and the thickness unevenness is saturated in this range.

The lower limit of the stretching temperature in the transverse stretching direction is preferably 60°C. If the stretching temperature is 60°C or higher, breakage may be less likely to occur. The upper limit of the stretching temperature in the transverse stretching direction is preferably 100°C. If the stretching temperature is 100°C or lower, the degree of orientation in the transverse direction increases, whereby the mechanical characteristics are improved.

The lower limit of the stretching ratio in the transverse stretching direction is preferably 3.5 times, more preferably 3.6 times, and particularly preferably 3.7 times. If the stretching ratio is 3.5 times or more, the degree of orientation in the transverse direction does not become too weak, whereby the mechanical characteristics and the thickness unevenness are improved. The upper limit of the stretching ratio in the transverse stretching direction is preferably 5 times, more preferably 4.5 times, and particularly preferably 4.0 times. If the stretching ratio is 5.0 times or less, the effect of improving the mechanical strength and the thickness unevenness is maximized (saturated) even in this range.

### [Heat Setting Step]

The lower limit of the heat setting temperature in the heat setting step is preferably 195°C, and more preferably 200°C. If the heat setting temperature is 195°C or higher, the heat shrinkage rate of the film decreases, and the inorganic thin film layer is less likely to be damaged even after a boiling treatment, whereby the gas barrier properties are improved. The upper limit of the heat setting temperature is preferably 220°C. If the heat setting temperature is 220°C or lower, the substrate film layer is not melted, whereby the substrate film layer is less likely to become brittle.

### [Heat Relaxation Section Step]

The lower limit of the relaxation rate in the heat relaxation section step is preferably 0.5%. If the relaxation rate is 0.5% or more, breakage may be less likely to occur during heat setting. The upper limit of the relaxation rate is preferably 10%. If the relaxation rate is 10% or less, the shrinkage in the machine direction during heat setting decreases, and as a result, the distortion of molecular orientation at the film edge is reduced, whereby the straight tear properties are improved. The film is less likely to sag, and thickness unevenness is less likely to occur.

### [Cooling Step]

In the cooling step after relaxation has been performed in the heat relaxation section step, the temperature of the surface of the edge of the polyester film is preferably 80°C or lower.

If the temperature of the film edge after passing through the cooling step exceeds 80°C, the edge is stretched by the tension applied when the film is wound, and as a result, the heat shrinkage rate in the machine direction of the edge increases. Hence, the heat shrinkage rate distribution in the transverse direction of the roll becomes non-uniform. When such a roll is heated and conveyed for vapor-deposition processing and the like, streaky wrinkles occur, and the physical properties of the finally obtained gas barrier film may become non-uniform in the transverse direction.

In the cooling step, as a method for setting the surface temperature of the film edge to 80°C or lower, a method in which an edge is selectively cooled by providing a shielding plate on the center side in the transverse direction of a cooling zone and a method in which cold air is locally blown on the edge of the film as well as a method in which a temperature and an air volume in the cooling step are adjusted can be used.

In the intermediate layer film of the present invention, a coating layer (Y), an inorganic thin film layer (C), and a protective layer (b) can be provided as in the substrate film for the purpose of securing sufficient barrier properties and lamination strength. For the coating layer (Y), the composition, the adhesion amount, and the method for forming a coating layer described above as the coating layer (X) can be applied. For the inorganic thin film layer (C), the composition, the film thickness, and the method for forming an inorganic thin film layer described above as the inorganic thin film layer (A) can be applied. For the protective layer (b), the composition, the adhesion amount, and the method for forming a protective layer described above as the protective layer (a) can be applied.

### [Heat Sealable Resin Layer]

The laminated body of the present invention may include e a heat sealable resin layer containing a polyester as a component, and may further include an inorganic thin film layer (B) on the non-sealed surface of the heat sealable resin layer, and a protective layer (c) on the inorganic thin film layer (B) when barrier performance is desired to be improved. In order to satisfy a predetermined heat sealing strength, the sealed surface (surface opposite to the non-sealed surface) of the heat sealable resin layer needs to be provided on either one of the outermost layers in the laminated body. For the inorganic thin film layer (B), the composition, the film thickness, and the method for forming an inorganic thin film layer described above as the inorganic thin film layer (A) can be applied. For the protective layer (c), the composition, the adhesion amount, and the method for forming a protective layer described above as the protective layer (a) can be applied.

The layer constitution of the heat sealable resin layer of the present invention is preferably a two-layer constitution in which a heat resistant layer is provided in addition to the heat sealing layer constituting the sealed surface. The heat resistant layer is disposed on the non-sealed surface side of the heat sealable resin layer. The constituent requirements for the layers will be described later, but in the case of the constitution including the heat sealing layer and the heat resistant layer, a layer having the largest content of an ethylene terephthalate component is the heat resistant layer. The layer constitution of the laminated body of the present invention is more preferably composed of three layers of the heat sealing layer, the heat resistant layer, and the inorganic thin film layer (B) in this order from any one of the outermost layers (sealed surface side).

In the heat sealable resin layer of the present invention, a protective layer may be provided on the outermost layer on the opposite side (non-sealed surface side) to the heat sealing layer. In this case, a constitution in which four layers of the heat sealing layer, the heat resistant layer, the inorganic thin film layer (B), and the protective layer (c) are laminated in this order is preferable. By providing the protective layer, the following merits are provided: not only the gas barrier properties are improved, but also the lamination strength is improved when the protective layer is laminated on another material, and the occurrence of cracks due to rubbing or flexing can be suppressed.

The thickness of the heat sealable resin layer is not particularly limited, but is preferably 3 µm or more and 200 µm or less. If the thickness of the heat sealable resin layer is less than 3 µm, the heat sealing strength may be insufficient or processing such as printing may be difficult, which is not so preferable. The thickness of the laminated body may be more than 200 µm, but the use weight of the laminated body increases to cause an increased cost, which is not preferable. The thickness of the laminated body is more preferably 5 µm or more and 160 µm or less, and still more preferably 7 µm or more and 120 µm or less.

The layer ratio of the heat sealing layer to the entire heat sealable resin layer is preferably 20% or more and 80% or less. When the layer ratio of the heat sealing layer is less than 20%, the heat sealing strength of the heat sealable resin layer decreases, which is not preferable. If the layer ratio of the heat sealing layer is more than 80%, the heat sealability of the heat sealable resin layer is improved, but the heat resistance is deteriorated, which is not preferable. The layer ratio of the heat sealing layer is more preferably 30% or more and 70% or less.

The layer ratio of the heat resistant layer is preferably 20% or more and 80% or less. If the layer ratio of the heat resistant layer is less than 20%, the heat resistance of the film is deteriorated, which is not preferable. If the layer ratio of the heat resistant layer is more than 80%, the ratio of the heat sealing layer of the laminated body is reduced by the high layer ratio, whereby the heat sealing properties are sacrificed, which is not preferable. The layer ratio of the heat resistant layer is more preferably 30% or more and 70% or less.

On the outermost layer (including the heat sealing layer) of the laminated body of the present invention, a layer subjected to a corona treatment, a coating treatment, or a flame treatment or the like in order to improve the printability and slippage of the film surface may be provided, and may be optionally provided within a range not missing the requirements of the present invention. In the following description, layers made of a polyester-based resin such as a heat sealing layer and a heat resistant layer are collectively described as a "polyester-based resin layer" to be distinguished from the inorganic thin film layer and the protective layer.

### (Characteristics of Heat Sealing Layer)

The upper limit of the haze per thickness of the heat sealing layer in the present invention is preferably 0.50%/µm, more preferably 0.40%/µm, and still more preferably 0.30%/µm. When the substrate film layer having a haze of 0.50%/µm or less is subjected to printing, the quality of printed characters and images is improved.

The heat sealing strength when the heat sealing layers of the laminated body of the present invention are heat sealed at a temperature of 200°C, a seal bar pressure of 0.2 MPa, and a sealing time of 4 seconds is preferably 8 N/15 mm or more and 30 N/15 mm or less. If the heat sealing strength is less than 8 N/15 mm, the sealed portion is easily peeled off, whereby the laminated body cannot be used as a packaging bag. The heat sealing strength is preferably 9 N/15 mm or more, and more preferably 10 N/15 mm or more. The heat sealing strength is preferably higher, but the currently obtainable upper limit is about 30 N/15 mm.

The laminated body of the present invention preferably has a hot water heat shrinkage rate of -5% or more and 5% or less in both a machine direction and a transverse direction when treated in hot water at 98°C for 3 seconds. If the shrinkage rate exceeds 5%, and the bag produced using the laminated body is subjected to a heat treatment such as retorting, not only the deformation of the bag increases, whereby the original shape cannot be maintained, but also cracks occur in the layer made of the inorganic substance, whereby the gas barrier properties are deteriorated, which is not preferable. The hot water heat shrinkage rate is more preferably 4% or less, and still more preferably 3% or less. Meanwhile, the case where the hot water heat shrinkage rate is less than -5% means that the laminated body is stretched, whereby the bag is less likely to maintain the original shape as in the case where the shrinkage rate is high, which is not preferable. The hot water heat shrinkage rate of the laminated body is more preferably -4% or more and 4% or less, and still more preferably -3% or more and 3% or less.

In the laminated body of the present invention, a folding holding angle measured by a method described later is preferably 20 degrees or more and 70 degrees or less. If the folding holding angle exceeds 70 degrees, a folding line is less likely to be formed when the laminated body is formed into a bag, whereby the appearance is deteriorated, which is not preferable. Meanwhile, the folding holding angle is preferably smaller, but the lower limit of the range that can be covered in the present invention is 20 degrees, and the folding holding angle of 25 degrees or more can be said to be practically preferable. The upper limit of the folding retention angle is more preferably 65 degrees, and still more preferably 60 degrees.

### (Constituent Raw Materials of Polyester-Based Resin Layer)

The raw material species of the polyester-based resin layer constituting the laminated body of the present invention contains an ethylene terephthalate unit as a main constituent component. Here, the phrase "containing an ethylene terephthalate unit as a main component" refers to containing 50 mol% or more of the ethylene terephthalate unit, when the whole amount of constituent components is defined as 100 mol%.

The polyester used in the polyester-based resin layer of the present invention preferably contains one or more components other than ethylene terephthalate. This is because the presence of components other than ethylene terephthalate improves the heat sealing strength of the heat sealing layer. In the heat resistant layer, the amount of components other than ethylene terephthalate is preferably small. However, by containing the components other than ethylene terephthalate, a difference in shrinkage rate between the heat resistant layer and the heat sealing layer can be reduced, leading to reduction in the curling of the laminated body. The content of each component is different between the heat sealing layer and the heat resistant layer, and will be described later. Examples of the dicarboxylic acid monomer that can be a component other than terephthalic acid constituting ethylene terephthalate include aromatic dicarboxylic acids such as isophthalic acid, 1,4-cyclohexanedicarboxylic acid, 2,6-naphthalenedicarboxylic acid, and orthophthalic acid; aliphatic dicarboxylic acids such as adipic acid, azelaic acid, sebacic acid, and decanedicarboxylic acid; and alicyclic dicarboxylic acids. However, it is preferable that a polycarboxylic acid having three or more valences (for example, trimellitic acid, pyromellitic acid, and anhydrides thereof) is not contained in the polyester.

Examples of a diol monomer that can be a component other than ethylene glycol constituting ethylene terephthalate include long chain diols such as neopentyl glycol, 1,4-cyclohexanedimethanol, diethylene glycol, 2,2-diethyl 1,3-propanediol, 2-n-butyl-2-ethyl-1,3-propanediol, 2,2-isopropyl-1,3-propanediol, 2,2-di-n-butyl-1,3-propanediol, hexanediol, and 1,4-butanediol, aliphatic diols such as hexanediol, and aromatic diols such as bisphenol A. However, it is preferable that the polyester do not contain a diol having 8 or more carbon atoms (for example, octanecliol and the like), or a polyalcohol having 3 or more valences (for example, trimethylolpropane, trimethylolethane, glycerin, and diglycerin and the like).

Furthermore, a polyester elastomer containing ε-caprolactone or tetramethylene glycol or the like may be contained as a component constituting the polyester. The polyester elastomer has an effect of lowering the melting point of the polyester-based resin layer, whereby the polyester elastomer can be particularly suitably used for the heat sealing layer.

Among them, the use of any one or more of neopentyl glycol, 1,4-cyclohexanedimethanol, 1,4-butanediol, and diethylene glycol is likely to set the heat sealing strength between the heat sealing layers to 8 N/15 mm or more, which is preferable. It is more preferable to use any one or more of neopentyl glycol and 1,4-cyclohexanedimethanol, and it is particularly preferable to use neopentyl glycol.

The polyester-based resin layer constituting the laminated body of the present invention may contain various additives such a wax, an antioxidant, an anti-static agent, a crystal nucleating agent, a viscosity reducing agent, a heat stabilizer, a coloring pigment, an anti-coloring agent, and an ultraviolet absorber and the like as necessary. Fine particles as a lubricant for improving the slippage of the film are preferably added to at least the outermost layer of the film. As the fine particles, any fine particles may be selected. Examples of the inorganic fine particles include those of silica, alumina, titanium dioxide, calcium carbonate, kaolin, and barium sulfate, and examples of the organic fine particles include acrylic resin particles, melamine resin particles, silicone resin particles, and cross-linked polystyrene particles. The average particle diameter of the fine particles may be appropriately selected as necessary within a range of 0.05 to 3.0 µm as measured by the Coulter counter.

As a method for blending the particles into the polyester-based resin layer constituting the laminated body of the present invention, for example, they can be added in an optional stage in the production of the polyester-based resin (resin), but they are preferably added in a stage of esterification, or a stage before the start of a polycondensation reaction and after completion of an ester exchange reaction as a slurry dispersed in ethylene glycol or the like, followed by carrying out the polycondensation reaction. Examples of the method include a method in which a slurry of particles dispersed in ethylene glycol, water, or other solvent or the like and polyester-based resin raw materials are blended using a kneading extruder with a vent, and a method in which dried particles and polyester-based resin raw materials are blended using a kneading extruder.

Hereinafter, preferable components contained in the heat sealing layer and the heat resistant layer will be described.

In the polyester used in the heat sealing layer constituting the laminated body of the present invention, the content of a dicarboxylic acid monomer and/or a diol monomer to be a component other than terephthalic acid and ethylene glycol constituting ethylene terephthalate is preferably 30 mol% or more, more preferably 32 mol% or more, and particularly preferably 34 mol% or more. The upper limit of the content of the monomer to be a component other than ethylene terephthalate is 50 mol%. Even if the melted resin is rapidly cooled and solidified after being extruded from a die when the content of the monomer to be a component other than ethylene terephthalate contained in the heat sealing layer is less than 30 mol%, the melted resin is crystallized in a subsequent stretching and heat setting step. This makes it difficult to set the heat sealing strength to 8 N/15 mm or more, which is not preferable.

Meanwhile, when the content of the monomer to be a component other than ethylene terephthalate contained in the heat sealing layer is 50 mol% or more, the heat sealing strength of the film can be increased, but the heat resistance of the heat sealing layer is extremely lowered, whereby the periphery of a sealed portion is blocked (a phenomenon in which a region broader than an intended region is sealed due to heat conduction from a heating member) at the time of heat sealing, which makes it difficult to perform appropriate heat sealing. The content of the monomer to be a component other than ethylene terephthalate is more preferably 48 mol% or less, and particularly preferably 46% or less.

In the polyester used in the heat resistant layer that can constitute the laminated body of the present invention, the content of a dicarboxylic acid monomer and/or a diol monomer to be a component other than terephthalic acid and ethylene glycol constituting ethylene terephthalate is preferably 9 mol% or more, more preferably 10 mol% or more, and particularly preferably 11 mol% or more. The upper limit of the content of the monomer to be a component other than ethylene terephthalate is 20 mol%. When the content of the monomer to be a component other than ethylene terephthalate contained in the heat resistant layer is less than 9 mol%, a difference in heat shrinkage rate between the heat resistant layer and the heat sealing layer increases, whereby the curling of the laminated body increases, which is not preferable. If the difference in the content of the monomer to be a component other than ethylene terephthalate contained in the heat resistant layer and the heat sealing layer increases, the difference in heat shrinkage rate between the layers during heat setting increases, and even if cooling after heat setting is strengthened, shrinkage to the heat sealing layer side increases, whereby the curling increases.

Meanwhile, when the content of the monomer to be a component other than ethylene terephthalate contained in the heat resistant layer is 20mol% or more, the heat resistance of the sealant is deteriorated such that heat applied during heat sealing causes a hole, which is not preferable. The content of the monomer to be a component other than ethylene terephthalate is more preferably 19 mol% or less, and particularly preferably 18 mol% or less. Concerning the content of the monomer to be a component other than ethylene terephthalate for controlling curling, in addition to the amount of each layer alone described above, the difference between the heat sealing layer and the heat resistant layer is more preferably 20 mol% or more and 35 mol% or less, and still more preferably 21 mol% or more and 34 mol% or less.

### (Production Conditions of Laminated Body)

The polyester-based resin layer constituting the laminated body of the present invention (hereinafter, may be simply described as film) can be obtained by melt-extruding the polyester raw materials described in the above Section 3.1. "Raw Material Species of Polyester-Based Resin Layer" with an extruder to form an un-stretched laminated film, and stretching the un-stretched laminated film by the following predetermined method. When the film includes the heat sealing layer and the heat resistant layer, or other layers, the timing of laminating the layers may be either before or after stretching. When the layers are laminated before stretching, it is preferable to employ a method in which resins as raw materials of the respective layers are melt-extruded by different extruders, and joined using a feed block or the like in the middle of a resin flow path. In the case of laminating after stretching, it is preferable to employ a laminate in which films separately formed are bonded together with an adhesive, or an extrusion laminate in which a melted polyester resin is caused to flow through the surface layer of a single film or a laminated film and laminated. Among them, a method in which layers are laminated before stretching is preferable.

As described above, the polyester resin can be obtained through polycondensation of a dicarboxylic acid component and a diol component whose types and amounts are selected so that an appropriate amount of a monomer that can be a component other than ethylene terephthalate is contained. A mixture of two or more polyester chips can be used as a raw material of the polyester-based resin layer.

When the raw material resins are melt-extruded, it is preferable to dry the polyester raw material of each layer using a drier such as a hopper drier or a paddle drier, or a vacuum dryer. The polyester raw material of each layer is dried as described above, then melted at a temperature of 200 to 300°C using an extruder, and extruded into a laminated film. Any existing method such as a T-die method or a tubular method can be adopted for the extrusion.

Thereafter, the film melted by extrusion can be rapidly cooled to obtain an un-stretched film. As a method of rapidly cooling the melted resin, a method of casting the molted resin from a spinneret onto a rotary drum to rapidly cool and solidify the resin, thereby obtaining a substantially unoriented resin sheet can be suitably employed.

The film may be formed by any method of non-stretching, uniaxial stretching (stretching in at least one of vertical (longitudinal) direction and transverse (width) direction), and biaxial stretching. From the viewpoint of the mechanical strength and productivity of the laminated body of the present invention, uniaxial stretching is preferable, and biaxial stretching is more preferable. Hereinafter, a sequential biaxial stretching method via vertical stretching-transverse stretching in which vertical stretching is first performed and then transverse stretching is performed will be described, but transverse stretching-vertical stretching in which the order of stretching is reversed may be adopted because only the main orientation direction is changed. A simultaneous biaxial stretching method may be adopted.

Stretching in the machine direction may be performed by introducing an un-stretched film into a vertical stretching machine in which a plurality of roll groups are successively arranged. In the vertical stretching, it is preferable to perform preliminary heating with a preheating roll until the film temperature reaches 65°C to 90°C. If the film temperature is lower than 65°C, the film is less likely to be stretched in the machine direction, whereby breakage is apt to occur, which is not preferable. If the temperature of the film is higher than 90°C, the film is apt to adhere a roll, whereby the film is apt to be wound around the roll, and the roll is apt to be made dirty in continuous production, which is not preferable.

When the film temperature reaches 65°C to 90°C, vertical stretching is performed. The vertical stretching rate may be 1 time or more and 5 times or less. A vertical stretching rate of 1 time means that no vertical stretching is performed, whereby the vertical stretching rate is set to 1 time to obtain a transverse uniaxially stretched film, and is set to 1.1 times or more to obtain a biaxially stretched film. The upper limit of the vertical stretching rate may be any value, but if the vertical stretching rate is too high, transverse stretching becomes difficult, and breakage is apt to occur, whereby the vertical stretching rate is preferably 5 times or less.

Loosening the film in the machine direction after the vertical stretching (relaxation in the machine direction) enables a reduction in the shrinkage rate of the film in the machine direction that is generated by the vertical stretching. Furthermore, the relaxation in the machine direction enables reduction in the bowing phenomenon (distortion) that occurs in a tenter. This is because the film is heated while gripped at both ends thereof in the film transverse direction in subsequent processes such as transverse stretching and a final heat treatment so that only a center portion of the film is shrunk in the machine direction. The relaxation rate in the machine direction is preferably 0% or more and 70% or less (a relaxation rate of 0% means no relaxation performed). The upper limit of the relaxation rate in the machine direction is determined according to raw materials used and conditions for the vertical stretching, whereby the relaxation cannot be performed exceeding this upper limit. In a polyester-based sealant according to the present invention, the upper limit of the relaxation rate in the machine direction is 70%. The relaxation in the machine direction can be performed by heating the vertically stretched film at a temperature of 65°C to 100°C or lower and adjusting the difference in the speed of rolls. As heating means, any of a roll, near-infrared light, far-infrared light, and a hot air heater and the like can be employed. The relaxation in the machine direction can not only be performed directly after the vertical stretching but can also be performed by narrowing a gap between clips in the machine direction during, for example, the transverse stretching (including a preheating zone) or the final heat treatment (in this case, both ends in the film transverse direction are also relaxed in the machine direction so that bowing distortion is reduced). Thus, the relaxation in the machine direction can be performed at any timing. After the relaxation in the machine direction (the vertical stretching when the relaxation is not performed), the film is preferably once cooled and is preferably cooled with a cooling roll having a surface temperature of 20 to 40°C.

It is preferable after the vertical stretching to perform the transverse stretching at a stretching rate of about 3 to 5 times at 65°C to 110°C with the film gripped by clips at both end edges in the transverse direction in a tenter. Before performing the stretching in the transverse direction, it is preferable to perform preliminary heating, and the preliminary heating may be performed until the surface temperature of the film reaches 75°C to 120°C.

After the transverse stretching, it is preferable to cause the film to pass through an intermediate zone in which active heating operation is not performed. A final heat treatment zone following a transverse stretch zone in the tenter has a higher temperature than that of the transverse stretch zone, whereby heat of the final heat treatment zone (a hot blast itself or radiation heat) flows into a transverse stretching process without the intermediate zone. In this case, the temperature in the transverse stretch zone is not stabilized, whereby the thickness accuracy of the film is deteriorated and the physical properties of the film such as the heat sealing strength and the shrinkage rate are varied. Therefore, the final heat treatment is preferably performed after causing the transversely stretched film to pass through the intermediate zone for a prescribed time. It is important, in this intermediate zone, to block an accompanying flow from the passing film and a hot blast from the transverse stretch zone and the final heat treatment zone in such a manner that a piece of strip-shaped paper is hung in the almost completely vertical direction when the paper is hung down without the film passing through the intermediate zone. A sufficient passing time through the intermediate zone is about 1 second to 5 seconds. If the passing time is shorter than 1 second, the length of the intermediate zone becomes insufficient, whereby a heat blocking effect becomes insufficient. Meanwhile, a longer intermediate zone is preferable, but a too long intermediate zone requires larger facility. Therefore, the sufficient passing time is about 5 seconds.

It is preferable to perform a heat treatment at a transverse stretching temperature or higher and 250°C or lower in the final heat treatment zone after the film passes through the intermediate zone. When the heat treatment temperature is lower than the vertical stretching temperature, the heat treatment exhibits no effect. In this case, the hot water shrinkage rate at 80°C of the film is higher than 5%, which is not preferable. The higher heat treatment temperature decreases the film shrinkage rate, but if the heat treatment temperature is higher than 250°C, the haze of the film is higher than 15%, or the film is melted and then dropped into a tenter during the final heat treatment, which is not preferable.

It is possible to reduce the shrinkage rate in the transverse direction by shortening the distance between the clips in the tenter at any rate during the final heat treatment (relaxation in the transverse direction). Therefore, it is preferable to perform the relaxation in the transverse direction within a range of 0% or more and 10% or less in the final heat treatment (a relaxation rate of 0% means no relaxation performed). The higher relaxation rate in the transverse direction lowers the shrinkage rate in the transverse direction. However, the upper limit of the relaxation rate (the shrinkage rate of the film in the transverse direction right after the transverse stretching) is determined according to raw materials used, conditions for the stretching in the transverse direction, and the heat treatment temperature, whereby the relaxation cannot be performed exceeding this upper limit. In the polyester-based sealant of the present invention, the upper limit of the relaxation rate in the transverse direction is 10%.

The passing time through the final heat treatment zone is preferably 2 seconds or more and 20 seconds or less. If the passing time is 2 seconds or less, the film passes through the heat treatment zone without the surface temperature of the film reaching a set temperature, whereby the heat treatment becomes meaningless. As the passing time becomes longer, the effect of the heat treatment is enhanced, whereby the passing time is preferably 2 seconds or more, and more preferably 5 seconds or more. However, a long passing time requires a large facility, whereby a sufficient passing time is practically 20 seconds or less.

After passing through the final heat treatment, it is preferable that the film is cooled by cooling air at 10°C or higher and 30°C or lower in a cooling zone. At this time, it is preferable to enhance a cooling efficiency by lowering the temperature of the cooling wind or increasing its speed in such a manner that the actual temperature of the film at an exit of the tenter becomes lower than the lower glass transition temperature of either the heat sealing layer or the heat resistant layer. The actual temperature refers to the surface temperature of the film measured with a non-contact radiation thermometer. If the actual temperature of the film at an exit of the tenter is higher than the glass transition temperature, the film suffers from heat shrinkage upon release of both the end parts of the film gripped by clips. At this time, the film is curled in a heat sealing layer having a high heat shrinkage rate, whereby the radius of curvature becomes small, which is not preferable.

A passing time through the cooling zone is preferably 2 seconds or more and 20 seconds or less. If the passing time is 2 seconds or less, the film passes through the cooling zone without the surface temperature of the film reaching the glass transition temperature, whereby the curvature radius decreases. As the passing time becomes longer, a cooling effect is enhanced, whereby the passing time is preferably 2 seconds or more, and more preferably 5 seconds or more. However, a long passing time requires a large facility, whereby a sufficient passing time is practically 20 seconds or less. Thereafter, both the end parts of the film are cut and removed, and the film is simultaneously wound to obtain a film roll.

### [Adhesive Layer]

For the adhesive layer used in the present invention, a general-purpose adhesive for lamination can be used. For example, it is possible to use solvent (free) type, aqueous type, and hot melt type adhesives containing poly(ester) urethane-based, polyester-based, polyamide-based, epoxy-based, poly(meth)acrylic-based, polyethyleneimine-based, ethylene-(meth)acrylic acid-based, polyvinyl acetate-based, (modified) polyolefin-based, polybutadiene-based, wax-based, and casein-based materials and the like as a main component. Among them, a urethane-based or polyester-based material is preferable in consideration of moist heat resistance that can withstand retorting and flexibility that can follow the dimensional changes of each substrate. As a method for laminating the adhesive layer, for example, the adhesive layer can be coated by a direct gravure coating method, a reverse gravure coating method, a kiss coating method, a die coating method, a roll coating method, a dip coating method, a knife coating method, a spray coating method, a fountain coating method, and other methods. The coated amount after drying is preferably 1 to 8 g/m² in order to exhibit sufficient adhesiveness after retorting. The coated amount is more preferably 2 to 7 g/m², and still more preferably 3 to 6 g/m². If the coated amount is less than 1 g/m², it is difficult to bond the film on the entire surface, whereby the adhesive force decreases. If the coated amount is more than 8 g/m² or more, it takes time to completely cure the film, and unreacted substances are apt to remain, whereby the adhesive force decreases.

Furthermore, in the laminated body of the present invention, at least one or more printed layers and other plastic substrates may be laminated between the inorganic thin film layer or the substrate film layer and the heat sealable resin layer, or on the outer side thereof. However, from the viewpoint of monomaterialization, the layers and the substrates to be laminated are limited to polyester-based layers and plastic substrates.

As a printing ink for forming the printed layer, an aqueous or solvent-based resin-containing printing ink can be preferably used. Herein, examples of a resin used in the printing ink include an acrylic resin, a urethane-based resin, a polyester-based resin, a vinyl chloride-based resin, a vinyl acetate copolymer resin, and mixtures thereof. The printing ink may contain known additives such as an anti-static agent, a light blocking agent, an ultraviolet absorber, a plasticizer, a lubricant, a filler, a coloring agent, a stabilizer, a lubricant, an antifoaming agent, a cross-linking agent, an anti-blocking agent, and an antioxidant. The printing method of forming the printed layer is not particularly limited, and known methods such as an offset printing method, a gravure printing method, and a screen printing method may be used. For drying the solvent after printing, known drying methods such as hot wind drying, hot roll drying, and infrared drying may be used.

### [Characteristics of Laminated Body]

The laminated body of the present invention preferably has an oxygen transmission rate of 5 ml/m²·d·MPa or less under conditions of 23°C and 65% RH from the viewpoint of exhibiting good gas barrier properties. Furthermore, by providing a barrier layer on each film, the oxygen transmission rate can be set to preferably 4 ml/m²·d·MPa or less, and more preferably 3 ml/m²·d·MPa or less. The oxygen transmission rate exceeding 5 ml/m²·d·MPa makes it difficult to cope with applications requiring high gas barrier properties, such as an alternative to an aluminum foil. Meanwhile, if the oxygen transmission rate is less than 0.5 ml/m²·d·MPa in any case, the barrier performance is excellent, but a residual solvent is less likely to outwardly permeate the bag, whereby the amount of the residual solvent transferred to the contents may relatively increase, which is not preferable. The lower limit of the oxygen transmission rate is preferably 0.5 ml/m²·d·MPa or more.

The laminated body of the present invention preferably has a water vapor transmission rate of 1.0 g/m²·d or less under conditions of 40°C and 90% RH from the viewpoint of exhibiting good gas barrier properties. Furthermore, by providing a barrier layer on each film, the water vapor transmission rate can be set to preferably 0.75 g/m²·d or less, and more preferably 0.5 g/m²·d or less. The water vapor transmission rate exceeding 1.0 g/m²·d·MPa makes it difficult to cope with applications requiring high gas barrier properties, such as an alternative to an aluminum foil. Meanwhile, if the water vapor transmission rate is less than 0.1 g/m², the barrier performance is excellent, but a residual solvent is less likely to outwardly permeate the bag, whereby the amount of the residual solvent transferred to the contents may relatively increase, which is not preferable. The lower limit of the water vapor transmission rate is preferably 0.1 g/m²·d or more.

In the laminated body of the present invention, the piercing strength measured according to JIS Z1707 is preferably 10 N or more, more preferably 12 N or more, and still more preferably 14 N or more. If the piercing strength is less than 10 N, and an external load is applied to the laminated film used as a bag, the bag may be punctured and the contents may leak.

In the laminated body of the present invention, the haze measured according to JIS K7136 is preferably 20% or less, more preferably 18% or less, and still more preferably 16% or less. If the haze is 20% or more, the laminated film used as a bag has poor transparency, which is not preferable from the viewpoint of the visibility of contents from the viewpoint of safety, and the appearance after printing.

The heat sealing strength when the heat sealing layers of the laminated body of the present invention are heat sealed at a temperature of 200°C, a seal bar pressure of 0.2 MPa, and a sealing time of 4 seconds is preferably 8 N/15 mm or more and 30 N/15 mm or less. If the heat sealing strength is less than 8 N/15 mm, the sealed portion is easily peeled off, whereby the laminated body cannot be used as a packaging bag. The heat sealing strength is preferably 9 N/15 mm or more, and more preferably 10 N/15 mm or more. The heat sealing strength is preferably higher, but the currently obtainable upper limit is about 30 N/15 mm.

### EXAMPLES

Hereinafter, the present invention will be described in more detail by way of Examples, but is not limited to the examples described below. Various evaluations were performed by the following measurement methods.

### (1) Thicknesses of Various Films

The thicknesses of films were measured in accordance with JIS K7130-1999 A method using a dial gauge.

### (2) Composition and Film Thickness of Inorganic Thin Film Layer

For laminated films (after lamination of thin films) obtained in Examples and Comparative Examples, a film thickness composition was measured by a calibration curve prepared in advance using an X-ray fluorescence analyzer ("ZSX100e" manufactured by Rigaku Corporation). The conditions of an excited X-ray tube were 50 kV and 70 mA.

### (3) Adhesion Amount of Protective Layer

In each of Examples and Comparative Examples, each laminated film obtained at the stage of laminating a protective layer on a substrate film was used as a sample. A test piece of 100 mm × 100 mm was cut out from this sample. A protective layer was wiped with 1-methoxy-2-propanol or dimethylformamide. From a change in the mass of the film before and after wiping, the adhesion amount of the protective layer was calculated.

### [Production of Laminated Bodies]

### (4) Production of Laminated Bodies for Evaluations

A substrate film, an intermediate layer film, and a heat sealing resin described in Examples and Comparative Examples were bonded to each other by a dry lamination method using a urethane-based two-component curable adhesive ("Takelac (registered trademark) A525S" manufactured by Mitsui Chemicals, Inc. and "Takenate (registered trademark) A50") were blended at a ratio of 13.5:1 (mass ratio)). The resultant was aged at 40°C for 4 days to obtain a laminated gas barrier laminated body for evaluation (hereinafter, sometimes referred to as "laminated body A"). Each of the thicknesses of the adhesive layers formed of the urethane based two-liquid-component curable adhesive after drying was about 4 µm.

### (5) Method for Evaluating Oxygen Transmission Rate

The oxygen transmission rate of the laminated body produced in the above (4) was measured in an atmosphere of a temperature of 23°C and a humidity of 65% RH using an oxygen transmission rate measurement apparatus ("OX-TRAN (registered trademark) 2/22" manufactured by MOCON) in accordance with JIS-K7126 B method. The oxygen transmission rate was measured in a direction in which oxygen permeated from the substrate film side to the heat sealable resin layer side of the laminated body.

### (6) Method for Evaluating Water Vapor Transmission Rate

For the laminated bodies produced in the above (4), the water vapor transmission rate was measured in an atmosphere of a temperature of 40°C and a humidity of 90% RH using a water vapor transmission rate measurement apparatus ("PERMATRAN-W 3/33 MG" manufactured by MOCON) in accordance with JIS-K 7129 B method. The water vapor transmission rate was measured in a direction in which water vapor permeated from the heat sealable resin layer side of the laminated body toward the substrate film side.

### (7) Method for evaluating Heat Sealing Strength

For the laminated bodies produced in the above (4), the heat sealing strength was measured in accordance with JIS Z1707. A specific procedure will be described. The heat sealed surfaces of the samples were bonded to each other with a heat sealer. The heat sealing conditions were an upper bar temperature of 200°C, a lower bar temperature of 30°C, a pressure of 0.2 MPa, and a time of 4 seconds. Adhesive samples were cut out so as to have a seal width of 15 mm. A peeling strength was measured at a tensile speed of 200 mm/min using a universal tensile tester "DSS-100" (manufactured by Shimadzu Corporation). The peeling strength is represented by strength per 15 mm (N/15 mm).

### (9) Method for Evaluating Piercing Strength

The laminated bodies produced in the above (4) was sampled by a 5 cm square, and the piercing strength of the film was measured in accordance with JIS Z1707 using a digital force gauge "ZTS-500N" manufactured by IMADA CO., LTD., an electric measuring stand "MX2-500N", and a piercing jig "TKS-250N".

### (10) Haze of Laminated Body

The haze of each of the laminated bodies obtained in Examples and Comparative Examples was measured in accordance with JIS K 7136 using a haze meter NDH-2000 (manufactured by Nippon Denshoku Industries Co., Ltd.).

### (11) Evaluation Criteria for Monomaterialization

For the laminated bodies produced in the above (4), as the evaluation criteria for monomaterialization, a laminated body in which the thickness of a polyester-based material with respect to the total thickness was 90% or more was evaluated as good (monomate).

### (12) Visual Recognition/Range Suitability

For the laminated bodies produced in the above (4), a laminated body having a haze of 20% or less and not using an aluminum foil was evaluated as good; a laminated body having a haze of 20% or more and not using an aluminum foil was evaluated as average; and a laminated body having an aluminum foil was evaluated as poor.

Hereinafter, coating liquids used in the present Examples and Comparative Examples will be described in detail. The coating liquids were used in Examples 1 to 7 and Comparative Examples 1 to 7.

### [Carbodiimide-Based Cross-Linking Agent (A)]

As a carbodiimide-based cross-linking agent, commercially available "Carbodilite (registered trademark) SV-02" manufactured by Nisshinbo Chemical Inc.; solid content: 40%) was prepared.

### [Oxazoline Group-Containing Resin (B)]

As an oxazoline group-containing resin, commercially available water-soluble oxazoline-group-containing acrylate ("EPOCROS (registered trademark) WS-300" manufactured by Nippon Shokubai Co., Ltd.; solid content: 10%) was prepared. The oxazoline group amount in this resin was 7.7 mmol/g.

### [Acrylic Resin (C)]

As an acrylic resin, a commercially available acrylic ester copolymer emulsion having a concentration of 25% by mass ("Movinyl (registered trademark) 7980" manufactured by Nichigo-Movinyl Co. Ltd.) was prepared. The acid value (theoretical value) of the acrylic resin was 4 mgKOH/g.

### [Urethane Resin (D)]

As a urethane resin, a commercially available polyester urethane resin dispersion ("Takelac (registered trademark) W605" manufactured by Mitsui Chemicals, Inc., solid content: 30%) was prepared. This urethane resin had an acid value of 25 mgKOH/g, and a glass transition temperature (Tg) of 100°C, which was measured by DSC. The proportion of its aromatic or aromatic-aliphatic diisocyanates was 55 mol% of the whole of its polyisocyanate components, the proportion being measured by 1H-NMR.

### [Silane Coupling Agent (E)]

As a silane coupling agent, commercially available "KBM903 (registered trademark)" manufactured by Shin-Etsu Chemical Co., Ltd., solid content 100%) was prepared. In use, the silane coupling agent was diluted with water to obtain a 2% aqueous solution.

### [Urethane Resin (F)]

In a four-neck flask equipped with a stirrer, a Dimroth condenser, a nitrogen introducing pipe, a silica gel drying pipe, and a thermometer, 143.95 parts by mass of methaxylylene diisocyanate, 25.09 parts by mass of 4,4'-methylenebis(cyclohexyl isocyanate), 28.61 parts by mass of ethylene glycol, 5.50 parts by mass of trimethylolpropane, 12.37 parts by mass of dimethylolpropionic acid, and 120.97 parts by mass of methyl ethyl ketone as a solvent were mixed. The mixture was stirred at 70°C under a nitrogen atmosphere to confirm that the reaction solution had reached a predetermined amine equivalent. Next, the temperature of the reaction solution was decreased to 35°C, and 9.14 parts by mass of triethylamine was then added to the reaction solution to obtain a polyurethane prepolymer solution. Next, 794.97 parts by mass of water was added to a reaction vessel equipped with a homodisper allowing high-speed stirring, and the temperature was adjusted to 15°C. The polyurethane prepolymer solution was added thereto and dispersed in the water while stirred and mixed at 2000 min-1. An amine aqueous solution obtained by mixing 22.96 parts by mass of 2-[(2-aminoethyl)amino]ethanol and 91.84 parts by mass of water was added thereto, and then an amine aqueous solution obtained by mixing 2.38 parts by mass of N-2-(aminoethyl)-3-aminopropyltrimethoxysilane (product name; KBM-603 manufactured by Shin-Etsu Chemical Co., Ltd.) and 9.50 parts by mass of water was added thereto to perform a chain extension reaction. Thereafter, methyl ethyl ketone and a part of water were removed under reduced pressure to obtain a polyurethane dispersion (E) having a solid content of 25% by mass and an average particle diameter of 70 nm. The Si content (according to charge calculation) of the obtained polyurethane dispersion (D-1) was 1200 mg/1 kg, and the methaxylylene group content (according to charge calculation) was 32% by mass.

### [Polyester Resin (G)]

As a polyester component, a polyester polyol ("DF-COAT GEC-004C" manufactured by DIC Corporation, solid content: 30%) was used.

### [Polyisocyanate Cross-Linking Agent (H)]

As a polyisocyanate component, a trimethylolpropane adduct of metaxylylene diisocyanate ("Takenate D-110N" manufactured by Mitsui Chemicals, Inc., solid content: 75%) was used.

### [Silane Coupling Agent (I)]

As a silane coupling agent, N-2-(aminoethyl)-3-aminopropyltrimethoxysilane ("KBM-603" manufactured by Shin-Etsu Chemical Co., Ltd.) was used.

### [Coating Liquid 1 used for Coating Layer]

Materials were mixed at the following blending ratio to prepare a coating liquid (resin composition for coating layer).

| | |
|---|---|
| Water | 54.40% by mass |
| Isopropanol | 25.00% by mass |
| Oxazoline group-containing resin (A) | 15.00% by mass |
| Acrylic resin (B) | 3.60% by mass |
| Urethane resin (C) | 2.00% by mass |

### [Coating Liquid 2 used for Coating Layer]

Materials were mixed at the following blending ratio to prepare a coating liquid (resin composition for coating layer).

| | |
|---|---|
| Water | 57.80% by mass |
| Isopropanol | 25.00% by mass |
| Carbodiimide-based cross-linking agent (A) | 2.10% by mass |
| Urethane resin (F) | 8.00% by mass |
| Silane coupling agent (E) | 7.10% by mass |

### [Coating Liquid 3 Used for Coating of Protective Layer]

Coating agents described below were mixed with each other to prepare a coating liquid 3. Here, the mass ratio of the urethane resin (E) in terms of a solid content is as shown in Table 1.

| | |
|---|---|
| Water | 22.00% by mass |
| Isopropanol | 30.00% by mass |
| Urethane resin (F) | 48.00% by mass |

### [Coating Liquid 4 Used for Coating of Protective Layer]

A solution (15% by weight) obtained by dissolving the silane coupling agent (I) in acetone and the isocyanate (G) were mixed at the following ratio, and the mixture was stirred for 10 minutes using a magnetic stirrer. The resulting prepared liquid was diluted with methyl ethyl ketone, and the polyester resin (G) was further added to obtain a coating liquid. The mixing ratio is shown below.

| | |
|---|---|
| Polyester resin (G) | 4.90% by mass |
| Isocyanate (H) | 1.87% by mass |
| Silane coupling agent (I) * acetone diluted solution | 0.85% by mass |
| Methyl ethyl ketone | 92.39% by mass |

Hereinafter, a method for producing a laminated film used in each of Examples and Comparative Examples will be described. The laminated films were used in Examples 1 to 8 and Comparative Example 1 to 7, and shown in Table 2.

### 1. Substrate Film

### (Preparation of Polyester Resin Recycled from PET Bottles)

A recycled polyester raw material was obtained by washing PET bottles for beverages to remove foreign matters such as remaining beverage, thereafter melting flakes obtained by pulverizing the PET bottles by an extruder, further changing the filter with a filter having a smaller mesh size, then separating the fine foreign matters by filtration twice, and then separating the fine foreign matters by third filtration using a filter with the smallest mesh size of 50 µm. The obtained resin had a composition of terephthalic acid/isophthalic acid//ethylene glycol = 97.0/3.0//100 (mol%), and the intrinsic viscosity of the resin was 0.70 dl/g. This resin was defined as a polyester A.

### (Production of Substrate Film)

A substrate film was produced using a polyethylene terephthalate resin made of terephthalic acid//ethylene glycol = 100//100 (mol%) as a polyester B and having an intrinsic viscosity of 0.62 dl/g, and a master batch containing, as a polyester C, the polyester B and 0.3% of amorphous silica having an average particle diameter of 1.5 µm. The respective raw materials were dried at 125°C under reduced pressure of 33 Pa for 8 hours. A mixture obtained by mixing these raw materials so that A/B/C became 80/10/10 (weight ratio) was charged into a single screw extruder. The resin temperature was set to 280°C from the extruder to a melt line, a filter, and a T-die. The resin temperature was set to 305°C for 30 seconds from the starting point of a compression part of a screw of the extruder, and thereafter to 280°C again.

The melt extruded out of the T-die was brought into close contact with a cooling roll to obtain an un-stretched sheet. Then, the un-stretched sheet was stretched (MD1) 1.41 times in the machine direction with rolls heated to 118°C and having different circumferential speeds, and further stretched (MD2) 2.92 times in the machine direction with rolls heated to 128°C and having different circumferential speeds. The vertically stretched sheet was introduced to a tenter, and one surface of the film was coated with the coating liquid 1 by a fountain bar coating method. The sheet was introduced to the tenter while being dried, preheated at 121°C, and thereafter transversely stretched 4.3 times at 131°C. Then, for heat setting, the sheet was subjected to a treatment at 180°C without relaxation (0%) for 2.5 seconds (TS1), thereafter to a treatment at 231°C with 5% of relaxation for 3.0 seconds (TS2), and further to a treatment at 222°C without relaxation for 2.5 seconds (TS3). Then, the sheet was cooled in the same tenter at 120°C for 6.0 seconds, and finally wound with a winder to obtain a biaxially stretched polyester film having a thickness of 12 µm.

Laminated films were similarly produced and evaluated except that the blending amounts of the resins A, B, and C were changed in preparing the substrate film layers described in Examples and Comparative Examples.

### 2. Intermediate Layer Film

### (Preparation of PBT Resin)

1) Polybutylene Terephthalate (PBT) Resin: 1100-211XG (CHANG CHUN PLASTICS CO. LTD., intrinsic viscosity: 1.28 dl/g) was used as a polybutylene terephthalate resin used in production of a biaxially stretched polyester film described later.
2) Polyethylene Terephthalate (PET) Resin: Terephthalic acid//ethylene glycol = 100//100 (mol%) (Toyobo Co., Ltd., intrinsic viscosity: 0.62 dl/g) was used as a polyethylene terephthalate resin used in production of a biaxially stretched polyester film described later.

### (Production of Film)

Using a single screw extruder, a mixed resin obtained by mixing 80% by mass of a PBT resin and 20% by mass of a PET resin was blended with silica particles having an average particle size of 2.4 µm as inert particles so that the silica concentration was set to 900 ppm with respect to the mixed resin, and the blended product was melted at 290°C. Then, a melt line was introduced into a static mixer having 12 elements. Accordingly, the polyester resin melted body was divided and laminated to obtain a multi-layer melted body formed of the same raw material. The melted body was cast from a T-die at 265°C and brought into close contact with a cooling roll at 15°C by an electrostatic adhesion method to obtain an un-stretched sheet.

Next, the film was roll-stretched 2.9 times at 60°C in the machine direction, and after the vertical stretching, the resin composition for adhesive layer (coating liquid 1) was applied by a fountain bar coating method. Thereafter, the film was introduced to a tenter while being dried, then caused to pass through the tenter, stretched 4.0 times in the transverse direction at 90°C, subjected to a heat tension treatment at 200°C for 3 seconds and a relaxation treatment of 9% for 1 second, and then cooled at 50°C for 2 seconds to cool the film. The surface temperature of the film edge at this time was 75°C.

Then, each of gripping parts at both ends were cut and removed by 9% to obtain a laminated film in which a coating layer of 0.030 g/m2 was formed on a polyester film having a thickness of 15 µm. The physical properties of the obtained film were shown in Table 1.

### 3. Heat Sealable Resin Layer

### (Preparation of Polyester Raw Material)

### [Synthesis Example 1]

A stainless steel autoclave equipped with a stirrer, a thermometer, and a partial reflux condenser was charged with 100 mol% of dimethyl terephthalate (DMT) as a dicarboxylic acid component, and 100 mol% of ethylene glycol (EG) as a polyalcohol component, such that the ethylene glycol became 2.2 times of the dimethyl terephthalate in molar ratio, and then a transesterification reaction was performed by using 0.05 mol% (relative to the acid component) of zinc acetate as a transesterification catalyst, with distilling off generated methanol from the system. Thereafter, 0.225 mol% (relative to the acid component) of antimony trioxide was added as a polycondensation catalyst, and a polycondensation reaction was performed at 280°C under the condition of reduced pressure of 26.7 Pa, to obtain a polyester (A) having an intrinsic viscosity of 0.75 dl/g. This polyester (A) is polyethylene terephthalate. The composition of the polyester is shown in Table 1.

### [Synthesis Example 2]

Polyesters (B) to (E) were obtained in the same procedure as that of the Synthesis Example 1, with changing the monomer. The composition of each polyester is shown in Table 1. In Table 1, TPA is terephthalic acid; BD is 1,4-butanediol; NPG is neopentyl glycol; CHDM is 1,4-cyclohexaneclimethanol; and DEG is cliethylene glycol. In the production of the polyester (E), SiO2 (Sylysia 266 manufactured by Fuji Silysia Ltd.) was added as a lubricant at a ratio of 7,000 ppm with erspect to the polyester. Each polyester was appropriately formed into a chip.

**[Table 1]**

| Polyester raw material | Raw material composition of polyester sealant (mol%) | | | | | | Lubricant addition amount (ppm) |
|---|---|---|---|---|---|---|---|
| | Dicarboxylic acid component | Diol component | | | | | |
| | TPA | EG | BD | NPG | CHDM | DEG | |
| A | 100 | 99 | 0 | 0 | 0 | 1 | 0 |
| B | 100 | 68 | 0 | 30 | 0 | 2 | 0 |
| c | 100 | 67 | 0 | 0 | 30 | 3 | 0 |
| D | 100 | 0 | 100 | 0 | 0 | 0 | 0 |
| E | 100 | 99 | 0 | 0 | 0 | 1 | 7000 |

### [Production of Film]

Polyesters A, B, D, and E were mixed at a mass ratio of 10:60:24:6, as raw materials of the heat sealing layer. Polyesters A, B, D, and E were mixed at a mass ratio of 57:31:6:6, as raw materials of the heat resistant layer. The mixed raw materials of the heat sealing layer and the heat resistant layer were fed into separate twin screw extruders, and melted at 270°C. The respective melted resins were adhered by a feed block in the middle of the flow path, discharged from a T die, and cooled on a chill roll set at a surface temperature of 30°C to obtain an un-stretched laminated film. The flow path of the melted resin was set so as to obtain a laminated film including the heat sealing layer on one side and the heat resistant layer on the other side to form a two-layer structure of two kinds (the heat sealing layer/the heat resistant layer). The discharged amount of the resin was adjusted so that the thickness ratio of the heat sealing layer and the heat resistant layer was 50/50.

The un-stretched laminated film obtained by cooling and solidification was introduced to a vertical stretching machine in which a plurality of roll groups were continuously arranged, preheated on a preheating roll until the film temperature reached 78°C, and then stretched 4.1 times. The film immediately after the vertical stretching was caused to pass through a heating furnace set by a hot air heater at 100°C, and subjected to a 20% relax treatment in the machine direction, by utilizing the difference in rotation speed between the rolls at an entrance and an exit of the heating furnace. Thereafter, the vertically stretched film was forcibly cooled by a cooling roll with a surface temperature set at 25°C.

The film after the relax treatment was introduced to a transverse stretching machine (tenter), subjected to preheating for 5 seconds until the surface temperature reached 105°C, and then stretched 4.0 times in the width direction (transverse direction). The film after the transverse stretching was directly introduced to the intermediate zone, through which the film was caused to pass in 1.0 second. In the intermediate zone of the tenter, hot air from the final heat treatment zone and hot air from the transverse stretching zone were blocked, such that, when a rectangular shaped piece of paper was hung in the intermediate zone in a state where a film was not caused to pass through, the piece of paper hung in a substantially completely vertical direction.

Thereafter, the film that passed through the intermediate zone was introduced to the final heat treatment zone, and subjected to a heat treatment at 190°C for 5 seconds. At this time, a relaxation treatment of 3% in the transverse direction was performed, by narrowing a clip interval in the film transverse direction, simultaneously with the heat treatment. After passed through the final heat treatment zone, the film was cooled with cooling air at 30°C for 5 seconds. At this time, the actual temperature of the film at the exit of the tenter was 45°C. The film was wound into a roll shape with both edges cut and removed, so as to have a width of 500 mm, to continuously produce a biaxially stretched film having a thickness of 30 µm over a predetermined length.

Hereinafter, a method for producing an inorganic thin film layer used in each of Examples and Comparative Examples will be described. The inorganic thin film layers were used in Examples 1 to 8 and Comparative Example 1 to 7, and shown in Table 2.

### (Formation of Inorganic Thin Film Layer M-1)

As an inorganic thin film layer M-1, aluminum oxide was vapor-deposited on the substrate film layer, the intermediate layer, or the heat resistant layer of the heat sealing resin. In the method of vapor-depositing aluminum oxide on the substrate film layer, a film is set on the unwinding side of a continuous type vacuum vapor-deposition apparatus, caused to travel via a cooling metal drum, and wound. At this time, the pressure of the continuous type vacuum vapor-deposition apparatus was reduced to 10-4 Torr or less. Metal aluminum having a purity of 99.99% was loaded in a crucible made of alumina from the lower portion of the cooling drum. The metal aluminum was heated and evaporated. While oxygen was supplied into the vapor to perform an oxidization reaction, aluminum oxide was deposited onto the film to form an aluminum oxide film having a thickness of 10 nm.

### <Formation of Inorganic Thin Film Layer M-2>

As an inorganic thin film layer M-2, a composite oxide layer of silicon dioxide and aluminum oxide was formed on a substrate film layer, an intermediate layer, or a heat resistant layer of a heat seal resin by an electron beam vapor-deposition method. Particulate SiO2 (purity: 99.9 %) and A12O3 (purity: 99.9%) having a size of about 3 mm to 5 mm were used as a vapor-deposition source. The film thickness of the inorganic thin film layer (SiO2/A12O3 composite oxide layer) in the film (inorganic thin film layer/coating layer-containing film) obtained as described above was 13 nm. The composition of the composite oxide layer was SiO2/A12O3 (mass ratio) = 60/40.

### (Coating of Coating Liquid 3 on Vapor-Deposited Film (Lamination of Protective Layer))

The coating liquid 3 prepared above was applied onto the inorganic thin film layer of the obtained vapor-deposited film by a gravure roll coating method, preliminarily dried at 110°C, and then sufficiently dried at 160°C to obtain a protective layer having a predetermined application amount. Thereafter, a post-heat treatment was performed at 40°C for 2 days.

### (Coating of Coating Liquid 4 on Vapor Deposited Film (Lamination of Protective Layer))

The coating liquid 4 prepared above was applied onto the inorganic thin film layer of the obtained vapor-depositied film by a gravure roll coating method, preliminarily dried at 110°C, and then sufficiently dried at 190°C to obtain a protective layer having a predetermined application amount. Thereafter, a post-heat treatment was performed at 40°C for 4 days.

As described above, film laminated bodies 1 to 3 described in Table 2 and including the coating layer, the inorganic thin film layer, and the protective layer on each film was produced. In each of Examples and Comparative Examples, the films 1 to 3 were used and bonded by a dry lamination method using an adhesive to obtain a laminated body having a constitution described in Table 3. As Comparative Examples, a polyamide film (N1100-15 µm manufactured by Toyobo Co., Ltd.; NY) as an intermediate layer, a linear low density polyethylene film (L4102-40 µm manufactured by Toyobo Co., Ltd.; LLDPE) as a heat sealing resin, or an un-stretched polypropylene film (P1146-70 µm manufactured by Toyobo Co., Ltd.; CPP) was used. The constitutions of the produced laminated bodies are shown in Table 3. The obtained laminated bodies were subjected to various evaluations. The results are shown in Table 3.

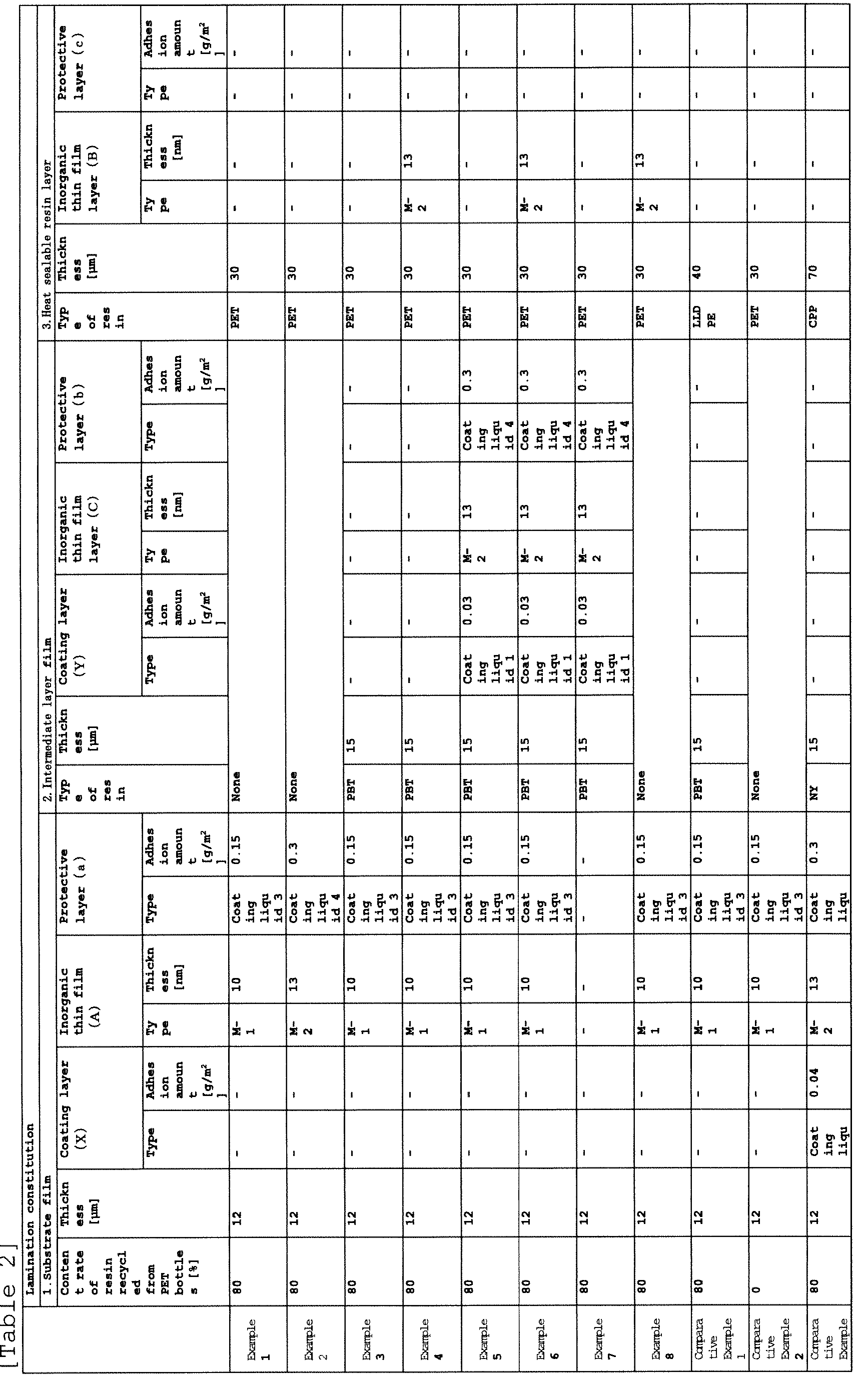

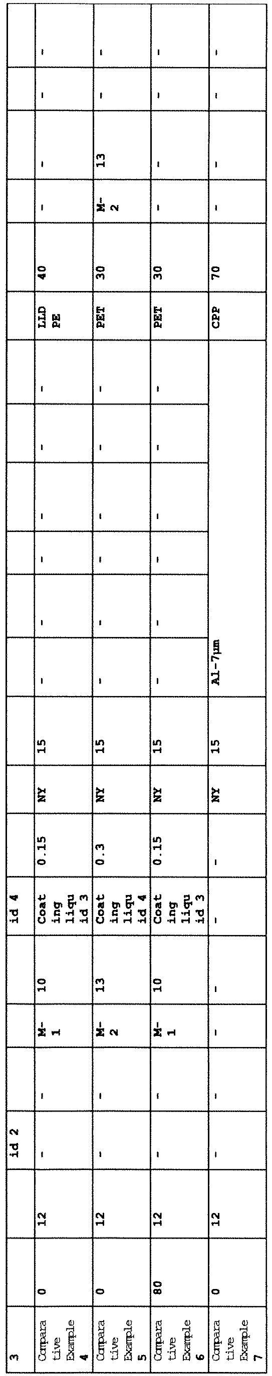

**[Table 3]**

| **No.** | **Constitution** | **Number of barrier layer** | **Evalation** | | | | | | | | |
|---|---|---|---|---|---|---|---|---|---|---|---|
| | | | **OTR [m1/m² · d · MPa]** | **WVTR [g/m² · d]** | **Sealing strength [N./15mm]** | **Puncture strength [N]** | **Thickness [ *µ*m]** | **Haze [%]** | **Ratio of monomate** | **Recycled use** | **Visual Recognition/Rang e Suitability** |
| Example 1 | 1 Barrier //3 | 1 | 4.9 | 0.5 | 14 | 18 | 36 | 9 | Good | Good | Good |
| Example 2 | 1 Barrier //3 | 1 | 3.0 | 0.4 | 13 | 18 | 36 | 9 | Good | Good | Good |
| Example 3 | 1 Barrier //2//3 | 1 | 4.2 | 0.53 | 12 | 23 | 55 | 9 | Good | Good | Good |
| Example 4 | 1 Barrier //2// Barrier 3 | 2 | 2.1 | 0.28 | 9 | 23 | 55 | 12 | Good | Good | Good |
| Example 5 | 1 Barrier //2 Barrier //3 | 2 | 1.0 | 0.36 | 13 | 23 | 55 | 12 | Good | Good | Good |
| Example 6 | 1 Barrier //2 Barrier // Barrier 3 | 3 | 0.8 | 0.21 | 8 | 23 | 55 | 15 | Good | Good | Good |
| Example 7 | 1//2 Barrier // Barrier 3 | 2 | 2.4 | 0.37 | 9 | 24 | 55 | 13 | Good | Good | Good |
| Example 8 | 1 Barrier // Barrier 3 | 2 | 2.0 | 0.29 | 10 | 14 | 36 | 10 | Good | Good | Good |
| Comparativ e Example 1 | 1 Barrier //LLDPE | 1 | 3.5 | 0.41 | 40 | 8 | 56 | 7 | Poor | Good | Good |
| Comparativ e Example 2 | General PET Barrier //3 | 3 | 8.0 | 0.60 | 14 | 18 | 36 | 9 | Good | Poor | Good |
| Comparativ e Example 3 | 1 Barrier //NY//CPP | 1 | 5.4 | 0.60 | 45 | 20 | 101 | 27 | Poor | Good | Average |
| Comparativ e Example 4 | 1 Barrier //NY//LLDPE | 1 | 4.2 | 0.49 | 40 | 20 | 75 | 8 | Poor | Poor | Good |
| Comparativ e Example 5 | 1 Barrier //NY// Barrier 3 | 2 | 2.5 | 0.53 | 9 | 24 | 55 | 10 | Poor | Poor | Good |
| Carparativ e Example 6 | 1 Barrier //NY//3 | 1 | 5.0 | 0.60 | 14 | 27 | 51 | 10 | Poor | Good | Good |
| Comparativ e Example 7 | General PET//NY//Al//CPP | 0 | 1.0 | 0.1 | 14 | 20 | 112 | - | Poor | Poor | Poor |

| | | | | | | | | | | | |
|---|---|---|---|---|---|---|---|---|---|---|---|
| *Barrier: Indicates that an inorganic thin film layer having barrier properties is laminated. | | | | | | | | | | | |

### INDUSTRIAL APPLICABILITY

The present invention achieved monomaterialization while maintaining toughness, sealability, and transparency by laminating a substrate film having significantly improved gas barrier performance by laminating and bonding an inorganic thin film layer, a coating layer, and a barrier protective layer on each film, and containing a polyester resin derived from PET bottles with a low environmental load and a sealant composed of a polyester component. Moreover, the laminated film of the present invention provides few processing steps, and can be easily produced, whereby a gas barrier film excellent in both economic efficiency and production stability and having homogeneous characteristics can be provided.

## Claims

1. A laminated body formed by laminating a polyester substrate film containing 50% by weight or more of a polyester resin recycled from PET bottles and a heat sealable resin layer in this order,
wherein the substrate film is a laminated film including an inorganic thin film layer (A) and a protective layer (a) containing a urethane resin on one surface thereof, and
the heat sealable resin layer is formed of a polyester-based resin mainly composed of ethylene terephthalate, and has a piercing strength of 10 N or more and a haze of 20% or less.

2. The laminated body according to claim 1, further comprising an intermediate layer film between the substrate film and the heat sealable resin layer with an adhesive interposed therebetween,
wherein the intermediate layer film is formed of a resin composition containing 70% by mass or more of a polybutylene terephthalate resin.

3. The laminated body according to claim 1 or 2, wherein an inorganic thin film layer (B) is laminated on the heat sealable resin layer.

4. The laminated body according to claim 2 or 3, wherein an inorganic thin film layer (C) is laminated on the intermediate layer film.

5. The laminated body according to any one of claims 2 to 4, wherein a protective layer (b) containing a urethane resin is laminated on the inorganic thin film layer (C) of the intermediate layer film.

6. The laminated body according to any one of claims 1 to 5, further comprising a coating layer (X) between the substrate film and the inorganic thin film layer (A).

7. The laminated body according to any one of claims 4 to 6, further comprising a coating layer (Y) between the intermediate layer film and the inorganic thin film layer (C).

8. The laminated body according to any one of claims 1 to 7, wherein each of the inorganic thin film layers (A) to (C) is a layer made of aluminum oxide or a composite oxide of silicon oxide and aluminum oxide.
